# EUROPEAN PATENT SPECIFICATION

(11) **EP 3 978 552 B1**
(45) Date of publication and mention of the grant of the patent: **15.01.2025**
(21) Application number: 20815255.3
(22) Date of filing: 21.04.2020
(51) Int. Cl.: C08J 3/24, C07C 217/50, B01J 20/26, B01J 20/30, C08J 3/075, B01J 20/28

(54) **PRODUCTION METHOD FOR WATER ABSORBENT AGENT, AND POLYACRYLIC ACID (SALT)-BASED WATER ABSORBENT RESIN**
HERSTELLUNGSVERFAHREN FÜR WASSERABSORBIERENDES UND POLYACRYLSÄURE(SALZ)WASSERABSORBIERENDES HARZ
PROCÉDÉ DE PRODUCTION D'UN ABSORBANT D'EAU ET RÉSINE ABSORBANT L'EAU À BASE DE (SEL DE) POLY(ACIDE ACRYLIQUE)

(30) Priority: 31.05.2019 JP 2019101901
(43) Date of publication of application: 06.04.2022
(73) Proprietor: Nippon Shokubai Co., Ltd., Osaka-shi, Osaka 541-0043 (JP)
(72) Inventor: ADACHI, Yoshifumi, Himeji-shi, Hyogo 671-1282 (JP); SHOBO, Yoshihiro, Himeji-shi, Hyogo 671-1282 (JP); FUJINO, Shin-ichi, Himeji-shi, Hyogo 671-1282 (JP); WATABE, Hiroyasu, Himeji-shi, Hyogo 671-1282 (JP); IWAMURA, Taku, Himeji-shi, Hyogo 671-1282 (JP); MASUDA, Makiko, Himeji-shi, Hyogo 671-1282 (JP)
(74) Representative: Ricker, Mathias
(86) International application number: PCT/JP2020/017238
(87) International publication number: WO 2020/241123

(56) References cited:
- WO-A1-2015/146784
- JP-A- 2002 060 544
- JP-A- 2016 209 880
- JP-A- H02 248 404
- KR-B1- 101 983 259
- DATABASE WPI Week 201944, 28 May 2019 Derwent World Patents Index; AN 2019-492445, XP002809210

## Description

### TECHNICAL FIELD

The present invention relates to a polyacrylic acid (salt)-based water absorbent resin, a method of making same, and to a water absorbent agent in which the absorbent resin is used.

### BACKGROUND ART

Water absorbent resins and water absorbent agents are water-swelling and water-insoluble macromolecular gelling agents and are used for various purposes such as: absorbent articles such as disposable diapers and sanitary napkins; soil water retention agents for agriculture and horticulture; and water stopping agents for industrial use. Many types of monomers and hydrophilic macromolecules are used as materials of the water absorbent resins and the water absorbent agents, and a polyacrylic acid (salt)-based water absorbent resin in which acrylic acid and/or a salt thereof (hereinafter, written as an "acrylic acid (salt)") is used as a monomer, has been most prevalently used from the viewpoint of water absorption performance of and producing cost for the water absorbent resins and the water absorbent agents.

The aforementioned polyacrylic acid (salt)-based water absorbent resin is, in many cases, subjected to surface crosslinking for the purpose of improving water absorption properties thereof. As a surface crosslinking agent, a polyvalent glycidyl compound such as polyethylene diglycidyl ether is used, and Patent Literature 1 discloses a compound represented by the following formula (where X and Y each represent a glycidyl group).

[Chem. 1] X-[(CH₂CH₂O)ₘCH₂-CH(OH)-CH₂-O]ₙ-(CH₂CH₂O)ₘ₋₁(CH₂CH₂)-Y

The aforementioned Patent Literature 1 further discloses a compound obtained by subjecting the epoxy groups of the above compound to ring-opening with water (that is, a compound in which X and Y are each -O-CH₂-CH(OH)-CH₂OH).

However, in general, in the case where a crosslinking agent is a compound that has a functional group with a high reactivity such as epoxy, the crosslinking agent itself has a skin irritation property. This leads to problems such as: a problem that the residual amount of the crosslinking agent and other conditions need to be strictly controlled; and a problem that complicated work is necessary in terms of a process in order to reduce the residual amount.

As crosslinking agents, polyhydric alcohols (Patent Literatures 2 and 3), an alkylene carbonate (Patent Literature 4 which is equivalent to DE4020780), and other crosslinking agents are also known. These crosslinking agents each have a higher safety but a lower reactivity than an epoxy-based crosslinking agent. Thus, water absorbent agents obtained by using these crosslinking agents may not be able to sufficiently exhibit characteristics of the water absorbent agents.

JP H02 248404 discloses a method of modifying a water-insoluble highly water-absorptive resin having specified groups as the side chains by improving the water absorptivity of the resin under applied pressure without detriment to its water absorptivity without applied pressure by crosslinking the resin with a reaction product of an epihalohydrin with ammonia or an amine. The water-insoluble highly water-absorptive resin having -COOM groups (wherein M is H or an alkali metal) as the side chains (e.g. polysodium acrylate) is crosslinked with a reaction product of an epihalohydrin (e.g. epichlorohydrin) with ammonia or an amine (e.g. ethylene diamine).

JP 2002 060544 discloses a cross-linking agent for water-absorbing resin particles having no epoxy group in a molecule, excellent in safety, and effectively cross-linkable in surface layers of the water-absorbing resin particles at a low temperature to give an excellently water-absorbing material, and to provide a water-absorbing material obtained by using the cross-linking agent and a method for manufacturing the cross-linking agent. The crosslinking agent for a water-absorbing resin comprises at least one kind selected from (A1) first halohydrin compounds (A1) having at least two halohydrin groups D in a molecule, and (A2) second halohydrin compounds (A2) having at least two of the halohydrin groups in a molecule and at the same time having at least one ammonium group M in a molecule.

JP 2016 209880 discloses a water absorbent hardly generating gel blocking and suitable for use in a thin sanitary material and absorbent article having high content of the water absorber. There is provided a polyacrylic (salt)-based water absorbent of which a surface neighborhood is crosslinked by an organic surface crosslinking agent and which has a liquid passing improver at surface neighborhood and satisfies followings (A) to (D): (A) CR is 25 to 35 g/g; (B) SFC is 10×10cmsec/g or more; (C) soluble part is 5 to 20 mass%; (D) surface crosslinked layer toughness index is 40 or less, where the surface crosslinked layer toughness index = surface soluble part (%)/soluble part (%)×100.

WO 2015/146784 discloses a crosslinking agent composition for water-absorbing resins with which it is possible to produce a water-absorbing agent having a high water- absorption capacity. The water-absorbing agent is produced by crosslinking a water-absorbing resin with the crosslinking agent composition for water-absorbing resins. Disclosed is a crosslinking agent composition for water-absorbing resins containing a crosslinking agent (A) and a water absorption improver (B), wherein the water absorption improver (B) is a halohydrin compound (b1) or a compound (b2) containing at least one selected from the group consisting of carbonate, carbamide, carbamate, and ureide groups.

KR 101 983 259 discloses a preparation method of a low-temperature curing surface crosslinking agent of a superabsorbent resin, which comprises: a first step of mixing polyhydric alcohol and a Lewis acid catalyst at 30-40°C; a second step of adding epichlorohydrin to the mixture of the first step, and making reaction at 60-90°C to obtain halohydrin ether; a third step of adding a quaternary ammonium salt to halohydrin ether obtained in the second step and make reaction at 50-60°C; a fourth step of adding a strongly alkaline aqueous solution to a resultant product of the reaction in the third step to make condensation reaction; a fifth step of dividing the reaction product obtained in the fourth step into a salt layer and a resin layer including epichlorohydrin by using a dry filter at 40-60°C; a sixth step of recovering and removing excess of epichlorohydrin from the resultant product obtained in the fifth step; and a seventh step of adding an alkali absorbent to the resultant product obtained in the sixth step to perform mixing at 65-80°C. The fourth step of making condensation reaction includes: an A step of adding to the reaction product obtained in the third step a strongly alkaline aqueous solution as much as one third of strongly alkaline aqueous solution necessary for reaction with halohydrin ether to remove a salt water layer; and a B step of adding to the reaction product obtained in the A step a strongly alkaline aqueous solution as much as two-thirds of a strongly alkaline aqueous solution necessary for reaction with halohydrin ether to perform a decompression and dehydration process, wherein a reaction temperature in the B step is controlled to increase relative to the reaction temperature of the A step.

### CITATION LIST

### PATENT LITERATURE

[PTL 1] Japanese Laid-Open Patent Publication No. H11-310644
[PTL 2] Japanese Laid-Open Patent Publication No. S58-180233
[PTL 3] Japanese Laid-Open Patent Publication No. S61-16903
[PTL 4] Japanese Laid-Open Patent Publication No. H05-508425

### SUMMARY OF THE INVENTION

### PROBLEMS TO BE SOLVED BY THE INVENTION

As described above, if a crosslinking agent having high safety such as a polyhydric alcohol or an alkylene carbonate is used, it is difficult to sufficiently exhibit characteristics of the water absorbent agent. For example, even if an absorption capacity without pressure (CRC) is set to be high, there is room for enhancement of an absorption capacity under pressure (AAP), and it is more difficult to achieve both the absorption capacity under pressure (AAP) and a gel bed permeability (GBP). Thus, there has been a demand for a water absorbent agent that allows enhancement in terms of these drawbacks.

Considering this, an object of the present invention is to provide: a production method for a water absorbent agent in which, while an absorption capacity without pressure (CRC) is high, an absorption capacity under pressure (AAP) can also be enhanced without necessitating use of an epoxy-based crosslinking agent; and a polyacrylic acid (salt)-based water absorbent resin used for the water absorbent agent. An unessential but more preferable object of the present invention is to provide: a production method for a water absorbent agent in which both the absorption capacity under pressure (AAP) and a gel bed permeability (GBP) can be achieved; and a polyacrylic acid (salt)-based water absorbent resin used for the water absorbent agent.

### TECHNICAL PROBLEM

The present invention which can solve the above problem is described in the claims appended to the description.

### ADVANTAGEOUS EFFECTS OF THE INVENTION

The production method for the water absorbent agent and the polyacrylic acid (salt)-based water absorbent resin of the present invention make it possible to achieve both the absorption capacity under pressure (AAP) and the gel bed permeability (GBP) without necessitating use of an epoxy-based crosslinking agent. The water absorbent agent obtained by the method of the present invention and the polyacrylic acid (salt)-based water absorbent resin can be particularly suitably used for: absorbent bodies; absorbent articles such as disposable diapers, sanitary napkins, incontinence pads for adults, and diapers for adults, containing such absorbent bodies; and other products.

### BRIEF DESCRIPTION OF THE DRAWINGS

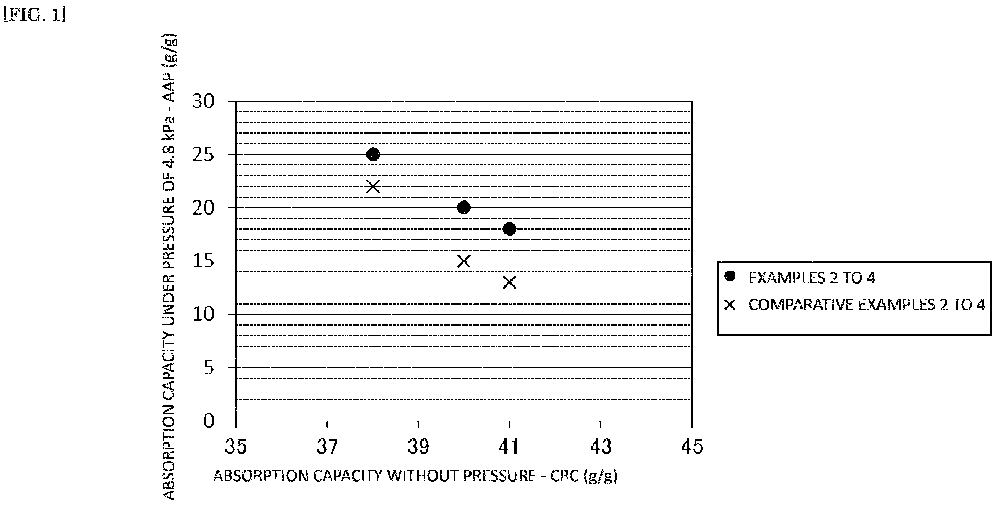

[FIG. 1] FIG. 1 shows the relationship between the absorption capacity without pressure (CRC) and the absorption capacity under pressure (AAP) of water absorbent agents obtained in examples and comparative examples.

### DESCRIPTION OF EMBODIMENTS

Hereinafter, a production method for a water absorbent agent and a polyacrylic acid (salt)-based water absorbent resin according to the present invention will be described in detail.

### [1] Surface Crosslinking Agent

### [1-1] Crosslinking Agent (A)

The present invention is characterized in that a polyacrylic acid (salt)-based water absorbent resin (hereinafter, referred to also as a base polymer or a surface crosslink polymer, or named otherwise) is surface-crosslinked with a compound represented by the following general formula (1) (corresponding to a surface crosslinking agent; hereinafter, sometimes referred to as a crosslinking agent (A)).

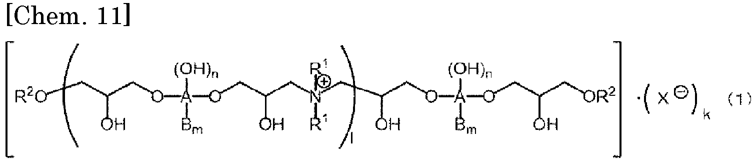

In general formula (1), "A"s each represent an (m+n+2)-valent C1-C6 polyhydric alcohol residue, "m"s and "n"s each independently represent an integer from 0 to 4, "m" and "n" that are bound to a same substituent group A satisfy 0≤m+n≤4, and "m+n" is preferably 0 to 2, more preferably 0 to 1, and most preferably 1. Specific examples of a polyhydric alcohol from which the polyhydric alcohol residue is originated will be described later.

In general formula (1), "R¹"s each represent a C1-C6 hydrocarbon group and preferably represent a C1-C3 hydrocarbon group.

Specific examples of "R¹" include a methyl group, an ethyl group, a propyl group, and an isopropyl group. Among them, a methyl group and an ethyl group are preferable, and a methyl group is particularly preferable. The plurality of "R¹"s may be the same as each other or different from each other, but are preferably the same as each other.

In general formula (1), "R²"s each represent a hydrogen atom or a C1-C4 hydrocarbon group. Specific examples of "R²" include a hydrogen atom, a methyl group, an ethyl group, a propyl group, an isopropyl group, an n-butyl group, a sec-butyl group, an isobutyl group, and a tert-butyl group. Among them, a hydrogen atom, a methyl group, and an ethyl group are preferable, and a hydrogen atom and a methyl group are most preferable. The plurality of "R²"s may be the same as each other or different from each other, but are preferably different from each other. It is preferable that: one of "R²"s is a hydrogen atom; and the other "R²" is a C1-C4 hydrocarbon group (particularly, a methyl group).

In general formula (1), "X" is a counterion of a quaternary ammonium group and represents a chloride ion, a bromide ion, a sulfate ion, a nitrate ion, a phosphate ion, or a hydroxide ion. In general formula (1), "l" is 1 to 6. "k" represents the number of counterions of quaternary ammonium groups and is an integer not smaller than 1. The number of the quaternary ammonium groups in the crosslinking agent and "k" are equal to each other.

In general formula (1), "B"s each represent a substituent group represented by the following general formula (2), 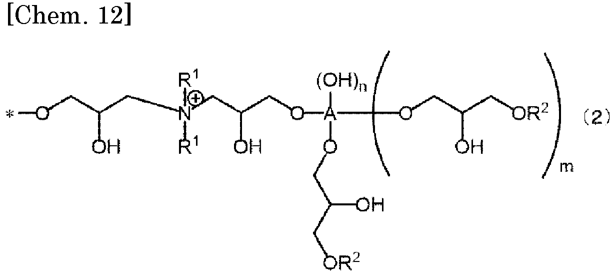 or by the following general formula (3).

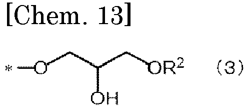

In general formula (2) and general formula (3), "R¹"s, "R²"s, "A", "m", and "n" are the same as those described regarding general formula (1). The plurality of "B"s in general formula (1) may be the same as each other or different from each other. For example, one of "B"s may be represented by general formula (2), and the other "B" may be represented by general formula (3). The number of the structures represented by general formula (2) existing in one molecule of the compound represented by general formula (1) may be two or more. The number of the structures represented by general formula (3) existing in the one molecule may also be two or more.

### [1-2] Production method for Crosslinking Agent (A)

The above crosslinking agent is produced by a production method including:
step 1 for reacting an epihalohydrin and an (m+n+2)-valent polyhydric alcohol represented by the following general formula (4),

   A-(OH)ₘ₊ₙ₊₂ (4);
step 2 for reacting a reaction product obtained in the aforementioned step 1 and a secondary amine represented by the following general formula (5),

   R¹₂NH (5);

   and
step 3 for converting the halogen atoms in the reaction product obtained in the aforementioned step 2 into -OR² groups.

In general formula (4), "A" represents an (m+n+2)-valent C1-C6 polyhydric alcohol residue, "m" and "n" each independently represent an integer from 0 to 4, and "m" and "n" bound to the same substituent group A satisfy 0≤m+n≤4. "m+n" is preferably 0 to 2, more preferably 0 to 1, and most preferably 1. Examples of the polyhydric alcohol from which the polyhydric alcohol residue is originated can include ethylene glycol, diethylene glycol, propylene glycol (referred to also as 1,2-propanediol), triethylene glycol, 1,3-propanediol, dipropylene glycol, glycerin, diglycerin, 2-butene-1,4-diol, 1,3-butanediol, 1,4-butanediol, 1,5-pentanediol, 1,6-hexanediol, 1,2-cyclohexanedimethanol, 1,2-cyclohexanediol, trimethylolpropane, diethanolamine, triethanolamine, pentaerythritol, and sorbitol. Among these polyhydric alcohols, ethylene glycol, diethylene glycol, glycerin, diglycerin, and other polyhydric alcohols are preferable. These polyhydric alcohols may be used singly, or two or more types of these polyhydric alcohols may be used in combination.

Specific examples of the secondary amine represented by general formula (5) include dimethylamine, diethylamine, methylethylamine, dipropylamine, and diisopropylamine. Among these secondary amines, dimethylamine and diethylamine are preferable, and dimethylamine is more preferable. These secondary amines may be used singly, or two or more types of these secondary amines may be used in combination.

Specific examples of the epihalohydrin include epichlorohydrin, epibromohydrin, and α-methylepichlorohydrin. Among these epihalohydrins, epichlorohydrin is preferable for the reason that epichlorohydrin is easily acquired and other reasons. These epihalohydrins may be used singly, or two or more types of these epihalohydrins may be used in combination.

In step 1, the epihalohydrin is preferably reacted in an amount of 0.2 to 2 equivalents and more preferably reacted in an amount of 0.3 to 1.5 equivalents with respect to equivalent of hydroxyl group of the polyhydric alcohol. If the amount is smaller than 0.2 equivalents, the number of halohydrin groups in the obtained halohydrin compound is small, and thus there will be less quaternary ammonium structures in the crosslinking agent (A) obtained in the subsequent step, whereby the obtained water absorbent agent may not be able to exhibit sufficient characteristics thereof. Meanwhile, if the amount is larger than 2 equivalents, unreacted epihalohydrins may remain in the obtained halohydrin compound, and thus an amount larger than 2 equivalents is not preferable.

In step 1, a catalyst can be used for the reaction between the polyhydric alcohol and the epihalohydrin. Examples of the catalyst include Lewis acid catalysts such as boron trifluoride diethyl ether complex, boron trifluoride butyl ethyl ether complex, boron trifluoride methanol complex, boron trifluoride ethylamine complex, boron trifluoride piperidine complex, zinc fluoroborate, copper fluoroborate, tin dichloride, tin tetrachloride, and aluminum chloride. A temperature for the reaction between the polyhydric alcohol and the epihalohydrin is preferably 30 to 200°C and more preferably 50 to 100°C.

Mechanisms of the reactions in steps 1 and 2 will be described with an example in which epichlorohydrin is used as the epihalohydrin. In step 1, a chlorohydrin ether compound having two or more chlorohydrin groups is obtained through a reaction between epichlorohydrin and the hydroxy groups of the polyhydric alcohol represented by general formula (4). In step 2, the secondary amine represented by general formula (5) is added to the chlorohydrin ether compound, whereby the amine is reacted with the chlorohydrin groups. Consequently, a compound represented by general formula (6) is obtained. 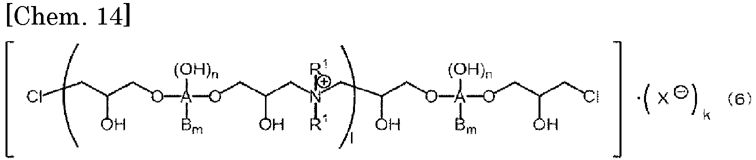 (In general formula (6), "A"s each represent an (m+n+2)-valent C1-C6 polyhydric alcohol residue, and "B"s each represent a substituent group represented by the following general formula (7), 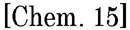 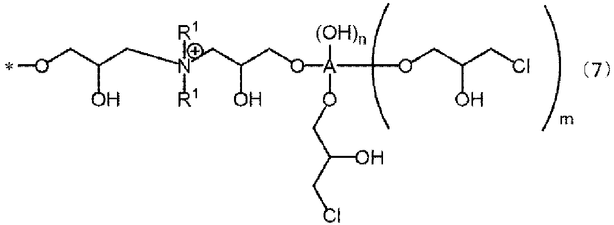 or by the following general formula (8), 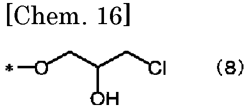 "R¹"s each represent a C1-C6 hydrocarbon group, "X" is a counterion of a quaternary ammonium group and represents a chloride ion, a bromide ion, or a hydroxide ion, "m"s and "n"s each independently represent an integer from 0 to 4, "m" and "n" that are bound to a same substituent group A satisfy 0≤m+n≤4, "l" is 1 to 6, and "k" is an integer not smaller than 1.)

In step 2, the secondary amine represented by general formula (5) is preferably reacted in an amount of 0.05 to 1 equivalent and more preferably reacted in an amount of 0.1 to 0.5 equivalents with respect to equivalent of halohydrin group of the halohydrin ether compound. If the amount is smaller than 0.05 equivalents, there will be less quaternary ammonium structures in the obtained crosslinking agent, whereby the obtained water absorbent agent may not be able to exhibit sufficient characteristics thereof. Meanwhile, if the amount is larger than 1 equivalent, unreacted secondary amines may remain, and thus an amount larger than 1 equivalent is not preferable.

The halohydrin groups remain at the ends of the compound represented by general formula (6) obtained in step 2. In step 3, the halogen atoms of the halohydrin groups are converted into OR² groups. Examples of a method for converting the halogen atoms into OR² groups include: a method in which the halogen atoms are hydrolyzed; a method in which conversion into epoxy compounds is made, and then hydrolysis is performed in an alcohol solvent; and a method in which the halogen atoms are converted into separate leaving groups, and then hydrolysis is performed. In step 3, the halogen atoms are ordinarily converted into hydroxy groups. In this case, each "R²" is a hydrogen atom. Alternatively, some or all of the halogen atoms may be reacted with an alcohol solvent and converted into alkoxy groups. In this case, each "R²" is a C1-C4 hydrocarbon group. For example, if step 3 is performed by using methanol as the solvent, the halogen atoms are converted into hydroxy groups or methoxy groups, and each "R²" is a hydrogen atom or a methyl group.

After step 3, sulfuric acid, nitric acid, or phosphoric acid may be added to adjust the pH of the aqueous solution. A sulfate ion, a nitrate ion, or a phosphate ion added in these steps becomes a counterion of a quaternary ammonium group in the crosslinking agent of the present invention and is represented by X in the compound represented by general formula (1). Other examples of the counterion of the quaternary ammonium group include: chloride ions and bromide ions derived from the epihalohydrin added in step 1; and hydroxide ions.

### [2] Definition of Terms

When a water absorbent resin having an uncrosslinked surface is treated with surface crosslinking agents including the above crosslinking agent (A), a surface-crosslinked water absorbent resin is obtained. Prior to giving description about a production method for a water absorbent agent containing the water absorbent resin, terms used in the present specification will be defined.

### [2-1] Water Absorbent Resin and Water Absorbent Agent

The "water absorbent resin" in the present specification means a water-swelling and water-insoluble macromolecular gelling agent and is, in general, in a powdery form. The term "water-swelling" means that an absorption capacity without pressure (CRC) defined in WSP241.3 (10) is not lower than 5 g/g. The term "water-insoluble" means that a water-soluble content (Ext) defined in WSP270.3 (10) is not higher than 50% by mass.

Although the aforementioned "water absorbent resin" is preferably a hydrophilic crosslinked polymer obtained by crosslinking and polymerizing an unsaturated monomer having a carboxyl group, the water absorbent resin does not need to be a crosslinked polymer over the total amount (100% by mass) thereof and can also contain an additive and other components within a range that allows performances such as the aforementioned CRC and Ext to be satisfied.

Meanwhile, if this term is written as a "water absorbent resin" without any distinguishment based on a crosslinking state, the term refers to either a "polymer of which only the inside is crosslinked, i.e., a polymer of which the inside and the surface have approximately equal crosslink densities" or a "polymer of which the inside and the surface are crosslinked, i.e., a polymer having a relatively higher crosslink density on the surface thereof than on the inside thereof". However, if this term refers to a water absorbent resin of which only the inside is crosslinked, the term may be written as a "pre-surface-crosslinking water absorbent resin", whereas, if the term refers to a water absorbent resin of which the inside and the surface are crosslinked, the term may be written as a "post-surface-crosslinking water absorbent resin". The aforementioned term "pre-surface-crosslinking" means "before addition of the surface crosslinking agents" or "after addition of the surface crosslinking agents but before start of a crosslinking reaction by heat treatment". The "water absorbent resin" may refer only to a resin component but may also contain a component other than resin, such as an additive.

The "water absorbent agent" in the present invention means a post-surface-crosslinking water absorbent resin in a state of being able to be shipped as a final product. Therefore, if the aforementioned "post-surface-crosslinking water absorbent resin" is in a state of being able to be shipped, the post-surface-crosslinking water absorbent resin corresponds to the "water absorbent agent", and in this case, the "post-surface-crosslinking water absorbent resin" and the "water absorbent agent" are synonymous with each other.

### [2-2] Polyacrylic Acid (Salt)-Based Water Absorbent Resin

A "polyacrylic acid (salt)-based water absorbent resin" in the present specification means a crosslinked polymer made from acrylic acid and/or a salt thereof (hereinafter, written as an "acrylic acid (salt)"). That is, the "polyacrylic acid (salt)-based water absorbent resin" is a crosslinked polymer that has a structural unit derived from the acrylic acid (salt) and that contains a graft component as an optional component.

Specifically, the polyacrylic acid (salt)-based water absorbent resin is a crosslinked polymer having an acrylic acid (salt) content that is preferably not lower than 50 mol%, more preferably not lower than 70 mol%, and further preferably not lower than 90 mol%, and meanwhile, preferably not higher than 100 mol% and particularly preferably approximately 100 mol% with respect to moieties excluding an internal crosslinking agent out of a monomer involved with a polymerization reaction.

### [2-3] "EDANA" and "WSP"

"EDANA" is an abbreviation for European Disposables and Nonwovens Associations. "WSP" is an abbreviation for Worldwide Strategic Partners and indicates a global standard measurement method for water absorbent agents or water absorbent resins, which is provided by the EDANA. In the present invention, physical properties of the water absorbent agent or the water absorbent resin are measured according to the original version of the WSP (revised in 2010), unless otherwise specified.

### [2-3-1] "CRC" (WSP241.3 (10))

"CRC" meaning an absorption capacity without pressure is an abbreviation for Centrifuge Retention Capacity and means an absorption capacity without pressure of the water absorbent agent or the water absorbent resin. Specifically, the "CRC" refers to an absorption capacity (unit: g/g) after 0.2 g of the water absorbent agent or the water absorbent resin is put into a bag made of a nonwoven fabric, then the bag is immersed in a large excess of a 0.9%-by-mass aqueous solution of sodium chloride for 30 minutes so as to cause the water absorbent agent or the water absorbent resin to freely swell, and then the water absorbent agent or the water absorbent resin is dehydrated by using a centrifugal separator (250 G).

### [2-3-2] "AAP" (WSP242.3 (10))

"AAP" is an abbreviation for Absorption Against Pressure and means an absorption capacity under pressure of the water absorbent agent or the water absorbent resin. Specifically, the "AAP" refers to an absorption capacity (unit: g/g) after 0.9 g of the water absorbent agent or the water absorbent resin is swollen in a large excess of a 0.9%-by-mass aqueous solution of sodium chloride for 1 hour under a pressure of 4.83 kPa (49 g/cm², 0.7 psi).

### [2-3-3] "Ext" (WSP270.3 (10))

"Ext" meaning a water-soluble content is an abbreviation for Extractables and means the water-soluble content (water-soluble component amount) of the water absorbent agent or the water absorbent resin. Specifically, the "Ext" refers to a dissolved polymer amount (unit: % by mass) after 1.0 g of the water absorbent agent or the water absorbent resin is added to 200 ml of a 0.9%-by-mass aqueous solution of sodium chloride, and the mixture is stirred for 1 hour or 16 hours at 250 rpm. The dissolved polymer amount is measured by using pH titration. The time for the stirring is written at the time of reporting a result.

### [2-4] Liquid Permeability

The "liquid permeability" of the water absorbent agent or the water absorbent resin in the present invention means the fluidity of a liquid passing between particles of a swollen gel under pressure or without pressure. Examples of a method for measuring the "liquid permeability" include a method that uses gel bed permeability (GBP).

The aforementioned "GBP" is the liquid permeability, by a 0.9%-by-mass aqueous solution of sodium chloride, of the water absorbent agent or the water absorbent resin under pressure or in a state of free swelling. The "GBP" is a value measured according to a GBP test method described in International Publication No. 2005/016393.

### [2-5] Other Terms

In the present specification, the term "... acid (salt)" means "... acid and/or a salt thereof', and the term "(meth)acrylic" means "acrylic and/or methacrylic".

### [3] Production Method for Water Absorbent Agent

The water absorbent agent according to the present invention is a surface-crosslinked polyacrylic acid (salt)-based water absorbent resin in a state of being able to be shipped as a final product. Firstly, a preferable production method for the aforementioned water absorbent resin will be described in detail.

### [3-1] Monomer Aqueous Solution Preparation Step

The present step is a step for preparing a monomer aqueous solution that contains: a monomer that contains an acrylic acid (salt) as a main component; and one or more types of polymerizable internal crosslinking agents. The aforementioned "main component" means that the amount of the acrylic acid (salt) contained with respect to the moieties excluding each internal crosslinking agent out of the monomer used for a polymerization reaction is not lower than 50 mol%, preferably not lower than 70 mol%, and more preferably not lower than 90 mol%, and meanwhile, the amount is preferably not higher than 100 mol%. Although a monomer slurry liquid can also be used within a range that does not influence the water absorption performance of the water absorbent agent obtained as a final product, a monomer aqueous solution will be described for convenience in the present specification.

### (Acrylic Acid (Salt))

In the present invention, a known acrylic acid (salt) is preferably used as a monomer (hereinafter, sometimes referred to as a "polymerizable monomer") from the viewpoint of physical properties of and productivity for the water absorbent agent or the water absorbent resin. The known acrylic acid contains small amounts of components such as a polymerization inhibitor and impurities.

As the aforementioned polymerization inhibitor, a methoxyphenol is preferably used, and a p-methoxyphenol is more preferably used. The concentration of the polymerization inhibitor in the acrylic acid is, on a mass basis, preferably not lower than 10 ppm and more preferably not lower than 20 ppm, and meanwhile, the concentration is preferably not higher than 200 ppm, more preferably not higher than 160 ppm, and further preferably not higher than 100 ppm, from the viewpoint of the polymerizability of the acrylic acid, the color tone of the water absorbent agent or the water absorbent resin, and other conditions.

Examples of the aforementioned impurities include compounds described in US Patent Application Publication No. 2008/0161512 as well as organic compounds such as acetic acid, propionic acid, and furfural.

Examples of the acrylic acid salt include salts obtained by neutralizing the above acrylic acid with the following basic compound. The acrylic acid salt may be a commercially available acrylic acid salt or may be a salt obtained by neutralizing the acrylic acid.

### (Basic Compound)

The "basic compound" in the present invention means a compound exhibiting basicity. Specifically, sodium hydroxide and other compounds correspond to the basic compound. Commercially available sodium hydroxides contain heavy metals such as zinc, lead, and iron in a ppm order on a mass basis. Thus, strictly speaking, the sodium hydroxides can be expressed also as compositions. In the present invention, such compositions are also regarded as being encompassed in a range of basic compounds.

Specific examples of the aforementioned basic compound include carbonates and bicarbonates of alkali metals, hydroxides of alkali metals, ammonia, organic amines, and other basic compounds. From among these basic compounds, a strongly basic compound is selected from the viewpoint of the water absorption performance of the water absorbent agent or the water absorbent resin. Therefore, a hydroxide of an alkali metal such as sodium, potassium, or lithium is preferable, and sodium hydroxide is more preferable. The basic compound is preferably in the form of an aqueous solution from the viewpoint of handleability.

### (Neutralization)

In the case where a salt obtained by neutralizing the acrylic acid is used as the aforementioned acrylic acid salt, the timing of performing the neutralization may be any of a timing before polymerization, a timing during polymerization, and a timing after polymerization, and the neutralization may be performed at a plurality of timings or locations. Further, the neutralization is preferably performed in a continuous manner from the viewpoint of production efficiency for the water absorbent agent or the water absorbent resin.

In the case of using an acrylic acid (salt) in the present invention, the neutralization ratio thereof with respect to the acid group of the monomer is preferably not lower than 10 mol%, more preferably not lower than 40 mol%, further preferably not lower than 50 mol%, and particularly preferably not lower than 60 mol%, and meanwhile, the neutralization ratio is preferably not higher than 90 mol%, more preferably not higher than 85 mol%, further preferably not higher than 80 mol%, and particularly preferably not higher than 75 mol%. If the neutralization ratio is set to fall within the range, it becomes easier to suppress reduction in the water absorption performance of the water absorbent agent or the water absorbent resin.

The aforementioned range of the neutralization ratio is applied to neutralization at any of the above timings, i.e., a timing before polymerization, a timing during polymerization, and a timing after polymerization. In addition, the range is applied not only to the acid group of the water absorbent resin but also to the acid group of the water absorbent agent as a final product in the same manner.

### (Another Monomer)

In the present invention, a monomer other than the above acrylic acid (salt) (hereinafter, written as "another monomer") can be used in combination with the acrylic acid (salt), as necessary.

Specific examples of the aforementioned other monomer include: anionic unsaturated monomers and salts thereof such as maleic acid, maleic anhydride, itaconic acid, cinnamic acid, vinylsulfonic acid, allyltoluenesulfonic acid, vinyltoluenesulfonic acid, styrenesulfonic acid, 2-(meth)acrylamide-2-methylpropane sulfonic acid, 2-(meth)acryloylethanesulfonic acid, 2-(meth)acryloylpropanesulfonic acid, and 2-hydroxyethyl(meth)acryloyl phosphate; unsaturated monomers that contain mercaptan groups; unsaturated monomers that contain phenolic hydroxy groups; unsaturated monomers that contain amide groups, such as (meth)acrylamide, N-ethyl(meth)acrylamide, and N,N-dimethyl(meth)acrylamide; and unsaturated monomers that contain amino groups, such as N,N-dimethylaminoethyl(meth)acrylate, N,N-dimethylaminopropyl(meth)acrylate, and N,N-dimethylaminopropyl(meth)acrylamide. The other monomer contains a water-soluble or hydrophobic unsaturated monomer. In the case of using the other monomer, the use amount thereof with respect to the monomer excluding the internal crosslinking agent is preferably not higher than 30 mol%, more preferably not higher than 10 mol%, and further preferably not higher than 5 mol%.

### (Internal Crosslinking Agent)

In a preferable production method in the present invention, an internal crosslinking agent is used. Specific examples of the internal crosslinking agent include N,N'-methylene bis(meth)acrylamide, (poly)ethylene glycol di(meth)acrylate, (poly)propylene glycol di(meth)acrylate, trimethylolpropane di(meth)acrylate, trimethylolpropane tri(meth)acrylate, glycerin tri(meth)acrylate, glycerin acrylate methacrylate, ethylene oxide-modified trimethylolpropane tri(meth)acrylate, pentaerythritol tetra(meth)acrylate, dipentaerythritol hexa(meth)acrylate, triallyl cyanurate, triallyl isocyanurate, triallyl phosphate, triallylamine, poly(meth)allyloxy alkane, (poly)ethylene glycol diglycidyl ether, glycerol diglycidyl ether, ethylene glycol, polyethylene glycol, propylene glycol, glycerin, pentaerythritol, ethylenediamine, polyethyleneimine, glycidyl(meth)acrylate, and other internal crosslinking agents. From among these internal crosslinking agents, one or more types of internal crosslinking agents are selected in consideration of reactivity and other conditions. Further, from the viewpoint of the water absorption performance of the water absorbent agent or the water absorbent resin and other conditions, an internal crosslinking agent having two or more polymerizable unsaturated groups is preferably selected, an internal crosslinking agent having pyrolytic property at a drying temperature described later is more preferably selected, and an internal crosslinking agent having two or more polymerizable unsaturated groups and having a (poly)alkylene glycol structure is further preferably selected.

Specific examples of the aforementioned polymerizable unsaturated groups include an allyl group and a (meth)acrylate group. Out of these polymerizable unsaturated groups, a (meth)acrylate group is preferable. Specific examples of the aforementioned internal crosslinking agent having a (poly)alkylene glycol structure include polyethylene glycol. The number (hereinafter, sometimes written as "n") of alkylene glycol units is preferably not smaller than 1 and more preferably not smaller than 6, and meanwhile, the number is preferably not larger than 100, more preferably not larger than 50, further preferably not larger than 20, and particularly preferably not larger than 10.

The use amount of the aforementioned internal crosslinking agent with respect to the monomer excluding the internal crosslinking agent is preferably not lower than 0.0001 mol%, more preferably not lower than 0.001 mol%, and further preferably not lower than 0.01 mol%, and meanwhile, the use amount is preferably not higher than 10 mol%, more preferably not higher than 5 mol%, and further preferably not higher than 1 mol%. If the use amount is set to fall within the range, it becomes easier to obtain a water absorbent agent or a water absorbent resin having a desired water absorption performance. Meanwhile, if the use amount is outside the range, reduction in an absorption capacity or increase in the water-soluble content due to reduction in a gel strength may be observed.

The aforementioned internal crosslinking agent is preferably added in advance at the time of preparing the monomer aqueous solution. In this case, a crosslinking reaction occurs simultaneously with a polymerization reaction. Alternatively, a polymerization reaction can also be started without adding the internal crosslinking agent, and the internal crosslinking agent can also be added during the polymerization reaction or after the polymerization reaction, to cause a crosslinking reaction. Further, these methods can also be employed in combination. Alternatively, self-crosslinking can also be caused without using the aforementioned internal crosslinking agent.

### (Substance To Be Added To Monomer Aqueous Solution)

In the present invention, when the aforementioned monomer aqueous solution is prepared, the following substance can be added to the monomer aqueous solution at one or more timings out of timings during the aforementioned polymerization reaction and crosslinking reaction or timings after the aforementioned polymerization reaction and crosslinking reaction from the viewpoint of improvement in the physical properties of the water absorbent agent or the water absorbent resin.

Specific examples of the substance include: hydrophilic macromolecules such as starch, starch derivatives, cellulose, cellulose derivatives, polyvinyl alcohol (hereinafter, sometimes referred to as "PVA"), polyacrylic acid (salt), and crosslinked products of polyacrylic acid (salt); and compounds such as carbonate, azo compounds, foaming agents for generating bubbles, surfactants, chelating agents, and chain transfer agents.

The addition amount of the aforementioned hydrophilic macromolecule with respect to the aforementioned monomer aqueous solution is preferably not higher than 50% by mass, more preferably not higher than 20% by mass, further preferably not higher than 10% by mass, and particularly preferably not higher than 5% by mass, and meanwhile, the addition amount is preferably not lower than 0% by mass and more preferably higher than 0% by mass. The addition amount of the aforementioned compound with respect to the aforementioned monomer aqueous solution is preferably not higher than 5% by mass, more preferably not higher than 1% by mass, and further preferably not higher than 0.5% by mass, and meanwhile, the addition amount is preferably not lower than 0% by mass and more preferably higher than 0% by mass.

If a water-soluble resin or a water absorbent resin is used as the aforementioned hydrophilic macromolecule, a graft polymer or a water absorbent resin composition such as a starch-acrylic acid (salt) copolymer or a PVA-acrylic acid (salt) copolymer is obtained. The graft polymer and the water absorbent resin composition are also encompassed in the range of the polyacrylic acid (salt)-based water absorbent resin according to the present invention.

### (Total Concentration of Monomer Components)

The above substances and components (hereinafter, written as "monomer components") are variously selected according to the purpose, the amounts of the monomer components are defined so as to satisfy the aforementioned ranges, and the monomer components are mixed with one another, whereby a monomer aqueous solution is prepared. In the present invention, the monomers can also be made into a mixed solution with water and a hydrophilic solvent instead of being made into an aqueous solution.

From the viewpoint of the physical properties of the water absorbent agent or the water absorbent resin, the total concentration of the monomer components is preferably not lower than 10% by mass, more preferably not lower than 20% by mass, and further preferably not lower than 30% by mass, and meanwhile, the total concentration is preferably not higher than 80% by mass, more preferably not higher than 75% by mass, and further preferably not higher than 70% by mass. The total concentration of the monomer components is calculated from the following expression (1). Total concentration of monomer components (% by mass) = [(total mass of monomer components)/(mass of monomer aqueous solution)]×100

In the aforementioned expression (1), the (mass of monomer aqueous solution) is not inclusive of any of the mass of a graft component, the mass of a water absorbent resin, and the mass of a hydrophobic organic solvent for reverse phase suspension polymerization.

### [3-2] Polymerization Step

The present step is a step for obtaining a crosslinked hydrogel polymer (hereinafter, written as a "hydrogel") by polymerizing the monomer aqueous solution which has been obtained in the aforementioned monomer aqueous solution preparation step and which contains the monomer containing the acrylic acid (salt) as a main component and the one or more types of polymerizable internal crosslinking agents.

### (Polymerization Initiator)

In the present invention, a polymerization initiator is used at the time of polymerization. Examples of the polymerization initiator include pyrolytic polymerization initiators, photolytic polymerization initiators, and redox-type polymerization initiators in which these polymerization initiators and reducing agents for promoting decomposition of these polymerization initiators are used in combination. Specific examples of the polymerization initiator include radical polymerization initiators such as sodium persulfate, potassium persulfate, ammonium persulfate, t-butyl hydroperoxide, hydrogen peroxide, and 2,2'-azobis(2-amidinopropane)dihydrochloride. From among these polymerization initiators, one or more types of polymerization initiators are selected in consideration of the type of polymerization and other conditions. Further, from the viewpoint of handle ability of the polymerization initiator and the physical properties of the water absorbent agent or the water absorbent resin, as the polymerization initiator, a peroxide or an azo compound is preferably selected, a peroxide is more preferably selected, and a persulfate is further preferably selected. In the case of using an oxidizing radical polymerization initiator, a reducing agent such as sodium sulfite, sodium bisulfite, ferrous sulfate, or L-ascorbic acid may be used in combination to cause redox polymerization.

The use amount of the aforementioned polymerization initiator with respect to the monomer excluding the internal crosslinking agent is preferably not lower than 0.001 mol%, more preferably not lower than 0.001 mol%, and further preferably not lower than 0.01 mol%, and meanwhile, the use amount is preferably not higher than 1 mol%, more preferably not higher than 0.5 mol%, and further preferably not higher than 0.1 mol%. The use amount of the aforementioned reducing agent with respect to the entire monomer excluding the internal crosslinking agent is preferably not lower than 0.0001 mol% and more preferably not lower than 0.0005 mol%, and meanwhile, the use amount is preferably not higher than 0.02 mol% and more preferably not higher than 0.015 mol%. If the use amounts are set to fall within the ranges, a water absorbent agent or a water absorbent resin having a desired water absorption performance is obtained.

Alternatively, the aforementioned polymerization reaction may be started by applying an active energy ray such as radiation, electron beam, or ultraviolet ray in the present invention. Further, the application of the active energy ray and the aforementioned polymerization initiator may be used in combination.

### (Type of Polymerization)

Examples of the type of polymerization employed in the present invention include aqueous solution polymerization, reverse phase suspension polymerization, spray polymerization, droplet polymerization, bulk polymerization, precipitation polymerization, and other types of polymerizations. From among these types, from the viewpoint of ease of polymerization control and the water absorption performance of the water absorbent agent or the water absorbent resin, aqueous solution polymerization or reverse phase suspension polymerization is preferably selected, aqueous solution polymerization is more preferably selected, and continuous aqueous solution polymerization is further preferably selected. The reverse phase suspension polymerization is described in International Publication No. 2007/004529, International Publication No. 2012/023433, and other literatures. The continuous aqueous solution polymerization enables production of a water absorbent agent or a water absorbent resin with high productivity, and specific examples of the continuous aqueous solution polymerization include: continuous belt polymerizations described in US Patent No. 4893999, US Patent No. 6906159, US Patent No. 7091253, US Patent No. 7741400, US Patent No. 8519212, Japanese Laid-Open Patent Publication No. 2005-36100, and other literatures; and continuous kneader polymerizations described in US Patent No. 6987151 and other literatures.

As a preferable type of the aforementioned continuous aqueous solution polymerization, there is high-temperature starting polymerization, high-concentration polymerization, foaming polymerization, and other types of continuous aqueous solution polymerizations. The "high-temperature starting polymerization" refers to a type of polymerization in which: the temperature of the monomer aqueous solution at the time of start of polymerization is set to be preferably not lower than 30°C, more preferably not lower than 35°C, further preferably not lower than 40°C, and particularly preferably not lower than 50°C; and the upper limit of the temperature is set to be the boiling point of the monomer aqueous solution. The "high-concentration polymerization" refers to a type of polymerization in which: the concentration of the monomer at the time of start of polymerization is set to be preferably not lower than 30% by mass, more preferably not lower than 35% by mass, further preferably not lower than 40% by mass, and particularly preferably not lower than 45% by mass; and the upper limit of the concentration is set to be the saturation concentration of the monomer aqueous solution. The "foaming polymerization" refers to a type of polymerization in which the aforementioned monomer aqueous solution containing a foaming agent or bubbles is polymerized. These types of polymerizations may be performed singly, or two or more of these types of polymerizations may be performed in combination.

A method for dispersing bubbles in the aforementioned foaming polymerization is not particularly limited. Examples of the method include: a method in which gas dissolved in the monomer aqueous solution is dispersed as bubbles by reduction in the solubility of the gas; a method in which gas is introduced from outside and dispersed as bubbles; a method in which a foaming agent is added to the monomer aqueous solution so as to foam the monomer aqueous solution; and other methods. The aforementioned dispersion methods may be performed in combination as appropriate according to intended physical properties of the water absorbent agent or the water absorbent resin.

In the aforementioned case of introducing gas from outside, specific examples of the gas include oxygen, air, nitrogen, carbon dioxide gas, ozone, and gas mixtures thereof. Among these gases, from the viewpoint of polymerizability and cost, an inert gas such as nitrogen or carbon dioxide gas is preferably used, and air or nitrogen is more preferably used.

Specific examples of the foaming agent that can be used include carbonates such as sodium carbonate, ammonium carbonate, and magnesium carbonate, bicarbonates, and other foaming agents.

The above types of polymerizations can be performed in an air atmosphere. However, from the viewpoint of the color tone of the water absorbent agent or the water absorbent resin, these types of polymerizations are preferably performed in an atmosphere of an inert gas such as nitrogen or argon, e.g., in an atmosphere with an oxygen concentration not higher than 1% by volume. Regarding dissolved oxygen in the monomer aqueous solution as well, it is preferable that the dissolved oxygen is sufficiently substituted by using an inert gas, e.g., the amount of the dissolved oxygen is set to be smaller than 1 mg/L.

### [3-3] Gel Grinding Step

The present step is a step for obtaining a hydrogel in particulate form (hereinafter, written as a "particulate hydrogel") by gel grinding of the hydrogel obtained in the aforementioned polymerization step. For distinguishment from "grinding" in a grinding step described later, grinding in the present step is written as "gel grinding".

The aforementioned gel grinding means adjustment of the hydrogel into a predetermined size by using a gel grinding machine such as a kneader, a meat chopper, or a cutter mill.

The manner of execution, an operating condition, and other details of gel grinding that are described in International Publication No. 2011/126079, are preferably applied to the present invention. In the case where the type of polymerization is kneader polymerization, the polymerization step and the gel grinding step are performed simultaneously. In the case where the particulate hydrogel is obtained in the polymerization step as in reverse phase suspension polymerization, spray polymerization, droplet polymerization, or another type of polymerization, the gel grinding step is regarded as being performed simultaneously with the polymerization step. Through the gel grinding step in the present invention, a water absorbent resin or a water absorbent agent in an amorphous ground form can be obtained.

### [3-4] Drying Step

The present step is a step for obtaining a dried polymer by drying the hydrogel and/or the particulate hydrogel obtained in the aforementioned polymerization step and/or gel grinding step to a desired resin solids content.

The resin solids content of the aforementioned dried polymer is obtained from a change in mass at the time of heating 1 g of the dried polymer at 180°C for 3 hours. The resin solids content is preferably not lower than 80% by mass, more preferably not lower than 85% by mass, further preferably not lower than 90% by mass, and particularly preferably not lower than 92% by mass, and meanwhile, the resin solids content is preferably not higher than 99% by mass, more preferably not higher than 98% by mass, and further preferably not higher than 97% by mass.

Specific examples of a method for drying the aforementioned hydrogel and/or particulate hydrogel include heat drying, hot air drying, drying under reduced pressure, fluidized bed drying, infrared drying, microwave drying, drum dryer drying, drying through azeotropic dehydration with a hydrophobic organic solvent, high-humidity drying using high-temperature steam, and other methods. Among these methods, from the viewpoint of drying efficiency, hot air drying is preferable, and band drying in which hot air drying is performed on a ventilation belt is more preferable.

From the viewpoint of the color tone of and drying efficiency for the water absorbent resin, a drying temperature in the aforementioned hot air drying is preferably not lower than 120°C and more preferably not lower than 150°C, and meanwhile, the drying temperature is preferably not higher than 250°C and more preferably not higher than 200°C. The drying temperature in the hot air drying is determined by the temperature of hot air.

A drying time in the present invention is preferably not shorter than 10 minutes, more preferably not shorter than 20 minutes, and further preferably not shorter than 30 minutes, and meanwhile, the drying time is preferably not longer than 2 hours, more preferably not longer than 1.5 hours, and further preferably not longer than 1 hour. If the drying temperature and the drying time are set to fall within the ranges, the physical properties of the water absorbent agent to be obtained can be set to fall within desired ranges.

Drying conditions other than the aforementioned drying temperature such as the speed of the aforementioned hot air and the drying time only have to be set as appropriate according to the moisture content and the total mass of the particulate hydrogel to be dried and a target resin solids content. When band drying is performed, various conditions described in International Publication No. 2006/100300, International Publication No. 2011/025012, International Publication No. 2011/025013, International Publication No. 2011/111657, and other literatures, are adopted as appropriate.

### [3-5] Grinding Step and Classification Step

The present steps are such that the dried polymer obtained through the aforementioned drying step is ground in a grinding step, and adjustment to particle diameters within a desired range is performed in a classification step, to obtain a pre-surface-crosslinking water absorbent resin.

Examples of a grinder used in the aforementioned grinding step include high-speed rotary grinders such as a roll mill, a hammer mill, a screw mill, and a pin mill, vibration mills, knuckle type grinders, cylindrical mixers, and other grinders. From among these grinders, a roll mill is preferably selected from the viewpoint of grinding efficiency. A plurality of these grinders can also be used in combination.

Examples of an adjustment method for particle diameters in the aforementioned classification step include sieve classification with a JIS standard sieve (JIS Z8801-1 (2000)), air-flow classification, and other adjustment methods. From among these adjustment methods, sieve classification is preferably selected from the viewpoint of classification efficiency. The step in which particle diameter adjustment for the water absorbent agent or the water absorbent resin is performed, is not limited to the grinding step or the classification step. The particle diameter adjustment can be performed in the polymerization step that particularly involves reverse phase suspension polymerization, droplet polymerization, or another type of polymerization. The particle diameter adjustment can be performed also in another step, e.g., a granulating step or a fine powder collecting step.

The mass-average particle diameter (D50) of the pre-surface-crosslinking water absorbent resin is preferably not smaller than 300 µm and not larger than 600 µm, and the proportion of particles therein smaller than 150 µm is preferably not higher than 5% by mass. The mass-average particle diameter (D50) is more preferably not smaller than 300 µm and not larger than 500 µm, further preferably not smaller than 300 µm and not larger than 450 µm, and particularly preferably not smaller than 300 µm and not larger than 400 µm. The proportion of the particles smaller than 150 µm is more preferably not higher than 4% by mass, further preferably not higher than 3% by mass, and particularly preferably not higher than 2% by mass. Further, a logarithmic standard deviation (σζ) indicating the degree of narrowness of a particle diameter distribution of the pre-surface-crosslinking water absorbent resin is preferably not smaller than 0.20 and not larger than 0.50, more preferably not smaller than 0.25 and not larger than 0.40, and further preferably not smaller than 0.27 and not larger than 0.35. The logarithmic standard deviation (σζ), of the particle diameter distribution, that takes a smaller value has an advantage of leading to more regular particle diameters so that segregation of the particles occurs less. However, setting of the logarithmic standard deviation (σζ) of the particle diameter distribution to be smaller than 0.2 requires removal of coarse particles and fine particles by repetition of grinding and classification, whereby a disadvantage may be incurred from the viewpoint of productivity and cost.

The above particle diameters are applied not only to a post-surface-crosslinking water absorbent resin but also to the water absorbent agent as a final product. Thus, it is preferable to perform surface crosslinking treatment (surface crosslinking step) such that the particle diameters having been adjusted to fall within the aforementioned range for the pre-surface-crosslinking water absorbent resin are maintained. It is more preferable to adjust the particle diameters by providing a sizing step subsequently to the surface crosslinking step.

### [3-6] Surface Crosslinking Step

The present step is a step for forming a portion having a higher crosslink density on the surface layer of the pre-surface-crosslinking water absorbent resin obtained through the above steps. The present step includes a mixing step, a heat treatment step, a cooling step, and other steps. In the surface crosslinking step, for example, surface crosslinking agents including the aforementioned crosslinking agent (A) are used to cause a crosslinking reaction on the surface of the pre-surface-crosslinking water absorbent resin, whereby a water absorbent agent or a water absorbent resin having been surface-crosslinked with the crosslinking agent (A) is obtained. Further, in the present surface crosslinking step, a surface crosslinking agent other than the crosslinking agent (A) (for example, another surface crosslinking agent described later) can also be used. Although detailed description will be given hereinafter based on an example in which the pre-surface-crosslinking water absorbent resin is treated with the crosslinking agent (A) in the present surface crosslinking step, use of another surface crosslinking agent instead of the crosslinking agent (A) is sufficient if the crosslinking agent (A) is not used. In the case of using another surface crosslinking agent instead of the crosslinking agent (A) in the present surface crosslinking step, the post-surface-crosslinking water absorbent resin only has to be surface-crosslinked with the crosslinking agent (A) in any of subsequent appropriate steps (including a recycling step described later).

### [3-6-1] Mixing Step

The present step is a step for obtaining a humidified mixture by mixing, in a mixing device, a solution containing the surface crosslinking agents (hereinafter, written as a "surface crosslinking agent solution") with the pre-surface-crosslinking water absorbent resin.

### (Surface Crosslinking Agent)

In the present invention, the above crosslinking agent (A) may be used alone, or another surface crosslinking agent may be used together with the crosslinking agent (A). Specific examples of the other surface crosslinking agent include surface crosslinking agents described in US Patent No. 7183456. From the viewpoint of handle ability of the surface crosslinking agent, the water absorption performance of the water absorbent agent or the water absorbent resin, and other conditions, a surface crosslinking agent that has two or more functional groups capable of reacting with a carboxyl group and that is an organic compound having covalent bonds formed therein, is preferably selected as the other surface crosslinking agent. By using the crosslinking agent (A) as a surface crosslinking agent, a structure derived from the crosslinking agent (A) (a structure represented by general formula (11) described later) can be localized on the surface of the water absorbent agent or the water absorbent resin (in particulate form).

More specific examples of the aforementioned other surface crosslinking agent include: polyhydric alcohol compounds such as ethylene glycol, diethylene glycol, triethylene glycol, tetraethylene glycol, polyethylene glycol, 1,2-propanediol, 1,3-propanediol, propylene glycol, 1,4-butanediol, 1,2-butanediol, 1,3-butanediol, 2,3-butanediol, 1,5-pentanediol, 1,4-pentanediol, 1,3-pentanediol, 1,2-pentanediol, 2,3-pentanediol, 2,4-pentanediol, dipropylene glycol, polypropylene glycol, glycerin, polyglycerin, 1,6-hexanediol, 1,5-hexanediol, 1,4-hexanediol, 1,3-hexanediol, 1,2-hexanediol, 2,3-hexanediol, 2,4-hexanediol, diethanolamine, and triethanolamine; polyvalent amine compounds such as ethylene diamine, diethylene triamine, triethylene tetramine, tetraethylene pentamine, pentaethylene hexamine, polyallylamine, and polyethyleneimine; haloepoxy compounds; condensates of polyvalent amine compounds and haloepoxy compounds; oxazoline compounds such as 1,2-ethylenebisoxazoline; oxazolidinone compounds; alkylene carbonate compounds such as 1,3-dioxolan-2-one (ethylene carbonate), 4-methyl-1,3-dioxolan-2-one, 4,5-dimethyl-1,3-dioxolan-2-one, 4,4-dimethyl-1,3-dioxolan-2-one, 4-ethyl-1,3-dioxolan-2-one, 4-hydroxymethyl-1,3-dioxolan-2-one, 1,3-dioxan-2-one, 4-methyl-1,3-dioxan-2-one, 4,6-dimethyl-1,3-dioxan-2-one, and 1,3-dioxopan-2-one; polyvalent glycidyl compounds such as ethylene glycol diglycidyl ether, polyethylene diglycidyl ether, glycerol polyglycidyl ether, diglycerol polyglycidyl ether, polyglycerol polyglycidyl ether, propylene glycol diglycidyl ether, polypropylene glycol diglycidyl ether, and glycidol; oxetane compounds; vinyl ether compounds; cyclic urea compounds; and other surface crosslinking agents.

In the case of using a polyhydric alcohol compound, the use amount thereof with respect to 1 part by mass of the crosslinking agent (A) is preferably not lower than 0.1 parts by mass, more preferably not lower than 1 part by mass, and further preferably not lower than 5 parts by mass, and meanwhile, the use amount is preferably not higher than 200 parts by mass, more preferably not higher than 100 parts by mass, and further preferably not higher than 30 parts by mass. In the case of using an alkylene carbonate compound, the use amount thereof with respect to 1 part by mass of the crosslinking agent (A) is preferably not lower than 0.1 parts by mass, more preferably not lower than 1 part by mass, and further preferably not lower than 2 parts by mass, and meanwhile, the use amount is preferably not higher than 100 parts by mass, more preferably not higher than 50 parts by mass, and further preferably not higher than 20 parts by mass.

The total use amount of all the surface crosslinking agents including the crosslinking agent (A) and the other surface crosslinking agent with respect to 100 parts by mass of the pre-surface-crosslinking water absorbent resin is preferably not lower than 0.01 parts by mass, and meanwhile, the total use amount is preferably not higher than 10 parts by mass, more preferably not higher than 5 parts by mass, and further preferably not higher than 2 parts by mass. If the total use amount of the surface crosslinking agents is set to fall within the range, an optimum crosslinked structure can be formed on the surface layer of the pre-surface-crosslinking water absorbent resin, and a water absorbent agent or a water absorbent resin having high physical properties is obtained. The use amount of the crosslinking agent (A) with respect to 100 parts by mass of the pre-surface-crosslinking water absorbent resin is preferably not lower than 0.001 parts by mass, more preferably not lower than 0.005 parts by mass, and further preferably not lower than 0.01 parts by mass, and meanwhile, the use amount is preferably not higher than 5 parts by mass, more preferably not higher than 1 part by mass, and further preferably not higher than 0.1 parts by mass.

The aforementioned surface crosslinking agents are preferably added in the form of an aqueous solution to the pre-surface-crosslinking water absorbent resin. In this case, the use amount of water for the aqueous solution with respect to 100 parts by mass of the pre-surface-crosslinking water absorbent resin is preferably not lower than 0.1 parts by mass, more preferably not lower than 0.3 parts by mass, and further preferably not lower than 0.5 parts by mass, and meanwhile, the use amount is preferably not higher than 20 parts by mass, more preferably not higher than 15 parts by mass, and further preferably not higher than 10 parts by mass. If the use amount of the water is set to fall within the range, the handleability of the surface crosslinking agent solution is improved, and the surface crosslinking agents can be evenly mixed with the pre-surface-crosslinking water absorbent resin.

In addition, a hydrophilic organic solvent can also be used in combination with the aforementioned water as necessary, to obtain the aforementioned surface crosslinking agent solution. In this case, the use amount of the hydrophilic organic solvent with respect to 100 parts by mass of the pre-surface-crosslinking water absorbent resin is preferably not higher than 5 parts by mass, more preferably not higher than 3 parts by mass, and further preferably not higher than 1 part by mass. Specific examples of the hydrophilic organic solvent include: lower alcohols such as methyl alcohol; ketones such as acetone; ethers such as dioxane; amides such as N,N-dimethylformamide; sulfoxides such as dimethyl sulfoxide; polyhydric alcohols such as ethylene glycol; and other hydrophilic organic solvents.

In addition, various additives to be added as described in "[3-7] Additives and Addition Step Therefor" described later can also be added to the aforementioned surface crosslinking agent solution or can also be separately added in the mixing step, within a range of not higher than 5 parts by mass.

### (Mixing Method and Mixing Condition)

For mixing between the aforementioned pre-surface-crosslinking water absorbent resin and the aforementioned surface crosslinking agent solution, a method is selected in which: the surface crosslinking agent solution is made in advance; and this solution is mixed by preferably being sprayed or dropped and more preferably being sprayed to the pre-surface-crosslinking water absorbent resin.

A mixing device for performing the aforementioned mixing preferably has a torque that is necessary to evenly and assuredly mix the pre-surface-crosslinking water absorbent resin and each surface crosslinking agent with each other. The mixing device is preferably a high-speed stirring type mixer and more preferably a high-speed stirring type continuous mixer. The rotation rate of the high-speed stirring type mixer is preferably not lower than 100 rpm and more preferably not lower than 300 rpm, and meanwhile, the rotation rate is preferably not higher than 10000 rpm and more preferably not higher than 2000 rpm.

From the viewpoint of mixability with the surface crosslinking agent solution and aggregability of the humidified mixture, the temperature of the pre-surface-crosslinking water absorbent resin supplied in the present step is preferably not lower than 35°C, and meanwhile, the temperature is preferably not higher than 80°C, more preferably not higher than 70°C, and further preferably not higher than 60°C. A mixing time is preferably not shorter than 1 second and more preferably not shorter than 5 seconds, and meanwhile, the mixing time is preferably not longer than 1 hour and more preferably not longer than 10 minutes.

### [3-6-2] Heat Treatment Step

The present step is a step for heating the humidified mixture obtained in the aforementioned mixing step, to cause a crosslinking reaction on the surface of the pre-surface-crosslinking water absorbent resin.

The heat treatment of the aforementioned humidified mixture may be performed in a state where the humidified mixture is left at rest, or may be performed while the humidified mixture is in a flowing state by using motive power of stirring or another motive power source. However, the humidified mixture is preferably heated while being stirred, in that the entire humidified mixture can be evenly heated by doing so. From the aforementioned viewpoint, examples of a heat treatment device for performing the aforementioned heat treatment include a paddle dryer (paddle type mixing heat treatment machine), a multi-fin processor, a tower dryer, and other heat treatment devices.

From the viewpoint of the type and the amount of the surface crosslinking agent, the water absorption performance of the water absorbent agent or the water absorbent resin, and other conditions, a heating temperature in the present step is preferably not lower than 150°C, more preferably not lower than 170°C, and further preferably not lower than 180°C, and meanwhile, the heating temperature is preferably not higher than 250°C and more preferably not higher than 230°C. A heating time in the present step is preferably not shorter than 5 minutes and more preferably not shorter than 7 minutes.

Control of the heating temperature and the heating time to fall within the aforementioned ranges leads to improvement in the water absorption performance of the water absorbent agent or the water absorbent resin to be obtained, and thus is preferable.

### [3-6-3] Cooling Step

The present step is an optional step provided as necessary subsequently to the aforementioned heat treatment step. The present step is a step for forcibly cooling the post-surface-crosslinking water absorbent resin with a high temperature having been subjected to the aforementioned heat treatment step to a predetermined temperature, to swiftly end the surface crosslinking reaction.

The cooling of the aforementioned post-surface-crosslinking water absorbent resin may be performed in a state where the water absorbent resin is left at rest, or may be performed while the water absorbent resin is in a flowing state by using motive power of stirring or another motive power source. However, the water absorbent resin is preferably cooled while being stirred, in that the entire water absorbent resin can be evenly cooled by doing so. From the aforementioned viewpoint, examples of a cooling device for performing the aforementioned cooling include a paddle dryer, a multi-fin processor, a tower dryer, and other cooling devices. These cooling devices may have the same specifications as those of the heat treatment device used in the heat treatment step. This is because the heat treatment device can be used as a cooling device by changing a heat medium of the heat treatment device to a coolant.

Although a cooling temperature in the present step only has to be set as appropriate according to the heating temperature in the heat treatment step, the water absorption performance of the water absorbent agent or the water absorbent resin, and other conditions, the cooling temperature is preferably not lower than 40°C and more preferably not lower than 50°C, and meanwhile, the cooling temperature is preferably not higher than 100°C, more preferably not higher than 90°C, and further preferably not higher than 70°C.

### [3-7] Additives and Addition Step Therefor

Meanwhile, an additive may be added to one or more of the pre-surface-crosslinking water absorbent resin and the post-surface-crosslinking water absorbent resin. In other words, the water absorbent agent can contain the additive in addition to the water absorbent resin. Examples of the additive include liquid permeability improvers or identical-component agents, aromatic substances, other additives, and other components. One type of these additives may be used, or two or more types of these additives may be combined.

### [3-7-1] Liquid Permeability Improver or Identical-Component Agent

Examples of the liquid permeability improvers include an additive having a function of improving the gel bed permeability (GBP) under pressure or without pressure of the water absorbent agent or the water absorbent resin. One or more types of compounds selected from among polyvalent metal salts, cationic polymers, and inorganic fine particles can be used as the liquid permeability improvers. Two or more types of these compounds can be used in combination as necessary. These additives may be added to exhibit another function, e.g., a function of an anti-caking agent at moisture absorption, a powder flow control agent, a binder for the water absorbent resin, or another substance, without being intended to improve the liquid permeability. If the additives are added for the purpose of the other function, the additives are referred to as identical-component agents. The addition amount of the aforementioned liquid permeability improver or identical-component agent is set as appropriate according to the selected compound.

### [3-7-2] Another Additive

Examples of another additive include chelating agents, inorganic reducing agents, organic reducing agents, hydroxy carboxylic acid compounds, surfactants, compounds having phosphorus atoms, oxidizing agents, organic powders of metallic soap or other substances, deodorants, antibacterial agents, pulps, thermoplastic fibers, and other additives. One of the other additives can be used, or two or more of the other additives can also be used. As the other additive, a chelating agent (in particular, an amino-polycarboxylic acid or an amino-polyvalent phosphoric acid) is preferable. Examples of the chelating agent include chelating agents described in Japanese Laid-Open Patent Publication No. H11-060975, International Publication No. 2007/004529, International Publication No. 2011/126079, International Publication No. 2012/023433, Japanese Laid-Open Patent Publication No. 2009-509722, Japanese Laid-Open Patent Publication No. 2005-097519, Japanese Laid-Open Patent Publication No. 2011-074401, Japanese Laid-Open Patent Publication No. 2013-076073, Japanese Laid-Open Patent Publication No. 2013-213083, Japanese Laid-Open Patent Publication No. S59-105448, Japanese Laid-Open Patent Publication No. S60-158861, Japanese Laid-Open Patent Publication No. H11-241030, Japanese Laid-Open Patent Publication No. H2-41155, and other literatures.

The other additive (in particular, a chelating agent) is added or contained within a range of not lower than 0.001% by mass and not higher than 1% by mass with respect to the monomer or the water absorbent resin.

### [3-7-3] Additive Addition Step

The aforementioned additives can be added before, after, or during one or more steps selected from among the above monomer aqueous solution preparation step, the above polymerization step, the above gel grinding step, the above drying step, the above grinding step, the above classification step, and the above surface crosslinking step. The additives are preferably added before, after, or during any of the steps subsequent to the polymerization step.

In the case where the additives are added to the water absorbent resin, if the additives are in the form of a liquid or a solution obtained with an aqueous medium such as water, it is preferable to spray the liquid or the solution to the water absorbent resin and apply a sufficient torque to evenly and assuredly mix the water absorbent resin and the additives with each other. Meanwhile, if the aforementioned additives are in a solid form such as powder form, the additives may be dry-blended with the water absorbent resin, or an aqueous liquid such as water may be used as a binder.

Specific examples of a device used for the aforementioned mixing include a stirring type mixer, a cylindrical mixer, a double-walled conical mixer, a V-shaped mixer, a ribbon mixer, a screw mixer, a flow type/rotary disk type mixer, an airflow mixer, a double-arm kneader, an internal mixer, a grinding kneader, a rotary mixer, a screw extruder, and other devices. In the case of using a stirring type mixer, the rotation rate thereof is preferably not lower than 5 rpm and more preferably not lower than 10 rpm, and meanwhile, the rotation rate is preferably not higher than 10000 rpm and more preferably not higher than 2000 rpm.

### [3-8] Other Steps

In the present invention, a granulating step, a sizing step, a fine powder removing step, a fine powder collecting step, a fine powder recycling step, an iron removing step, and other steps can be performed as necessary in addition to the above steps. In addition, at least one type of step selected from among a transporting step, a storing step, a packing step, a keeping step, and other steps may further be included.

The aforementioned granulating step may be, for example, a step for making a fine powder, which has been obtained in the fine powder collecting step, into a hydrogel. The aforementioned sizing step includes: a step for classifying and removing a fine powder subsequently to the surface crosslinking step; a step for performing classification and grinding if the water absorbent resin aggregates so as to have a size larger than a desired size; and other steps. The aforementioned fine powder recycling step may be a step for adding the fine powder to the hydrogel or another substance which is a material, in any of the steps of the production process for the water absorbent resin, the addition being performed directly or after the fine powder is made into a large hydrogel in the aforementioned granulating step.

### [4] Water Absorbent Resin and Water Absorbent Agent

### [4-1] Relationship between Water Absorbent Resin and Water Absorbent Agent

The post-surface-crosslinking water absorbent resin produced as described above is set in a state of being able to be shipped as a final product, whereby a water absorbent agent is obtained. The amount of the water absorbent resin contained in the water absorbent agent with respect to the total amount of the water absorbent agent is preferably not lower than 95% by mass, more preferably not lower than 98% by mass, further preferably not lower than 99% by mass, and particularly preferably 100% by mass. If the amount is not 100% by mass, the remaining components can include the above various additives.

Each of the water absorbent resin and the water absorbent agent of the present invention is characterized by having a structure that is represented by the following general formula (11).

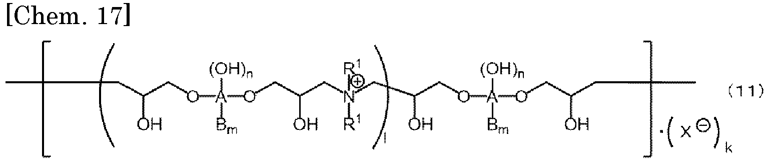

(In general formula (11), "B"s each represent a substituent group represented by the following general formula (12) 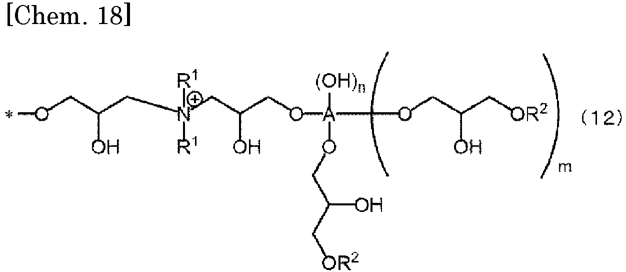 or by the following general formula (13),

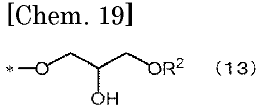

"A"s, "R¹"s, "R²"s, "X", "m"s, "n"s, "l", and "k" in general formulas (11), (12), and (13) are the same as those in general formulas (1), (2), and (3), and specific examples, preferable ranges, and other details thereof are also the same as those in general formulas (1), (2), and (3))

### [4-2] Characteristics of Water Absorbent Agent

The water absorbent agent of the present invention has, among the following characteristics, preferably one or more characteristics, more preferably two or more characteristics, and further preferably all of the three characteristics.

### (Absorption Capacity without Pressure (CRC))

The absorption capacity without pressure (CRC) of the water absorbent agent is preferably not lower than 25 g/g, and meanwhile, the CRC is preferably not higher than 45 g/g, more preferably not higher than 43 g/g, further preferably not higher than 40 g/g, particularly preferably not higher than 37 g/g, and most preferably not higher than 35 g/g.

If the aforementioned absorption capacity without pressure (CRC) is lower than 25 g/g, the water absorbent agent has a reduced absorption capacity and may become unsuitable for an absorbent body of an absorbent article such as a disposable diaper or a sanitary napkin. Meanwhile, if the aforementioned absorption capacity without pressure (CRC) is more than 45 g/g, a gel strength may be weakened. The present invention includes, as a preferable embodiment, a water absorbent agent having an absorption capacity without pressure (CRC) not lower than 25 g/g and lower than 35 g/g and having the structure (localized particularly on the surface of the particulate water absorbent agent) represented by the aforementioned general formula (11) so that the water absorbent agent has an excellent absorption capacity under pressure (AAP) and an excellent gel bed permeability (GBP). In addition, the present invention includes, as another preferable embodiment, a water absorbent agent having an absorption capacity without pressure (CRC) not lower than 35 g/g (preferably not lower than 36 g/g and more preferably not lower than 37 g/g) and having the structure (localized particularly on the surface of the particulate water absorbent agent) represented by the aforementioned general formula (11) so that the water absorbent agent has an excellent absorption capacity under pressure (AAP). The fact that a higher absorption capacity without pressure (CRC) of a water absorbent agent leads to a lower absorption capacity under pressure (AAP) thereof, has conventionally been a problem. However, since the present water absorbent agent has the structure (localized particularly on the surface of the particulate water absorbent agent) represented by the aforementioned general formula (11), setting of the absorption capacity without pressure (CRC) thereof to be as high as not lower than 35 g/g does not lead to a low absorption capacity under pressure (AAP) that is predicted from the value of the CRC. Thus, a relatively high absorption capacity under pressure (AAP) can be achieved. In the other embodiment as well, the absorption capacity without pressure (CRC) is preferably not higher than 45 g/g and more preferably not higher than 43 g/g. The CRC is further preferably not higher than 42 g/g.

### (Absorption Capacity under Pressure (AAP))

The absorption capacity under pressure (AAP) of the water absorbent agent is preferably not lower than 20 g/g, more preferably not lower than 21 g/g, further preferably not lower than 22 g/g, and particularly preferably not lower than 23 g/g, and meanwhile, the AAP is preferably not higher than 30 g/g and more preferably not higher than 28 g/g.

If the absorption capacity under pressure (AAP) is set to fall within the aforementioned range, a liquid return amount at application of pressure to an absorbent body is reduced, whereby the water absorbent agent becomes suitable for an absorbent body of an absorbent article such as a disposable diaper or a sanitary napkin.

### (Gel Bed Permeability (GBP))

A gel bed permeability (GBP) by a 0.9%-by-mass aqueous solution of sodium chloride under a pressure of 2.1 kPa (0.3 psi) is preferably not lower than 50×10⁻⁹ cm², more preferably not lower than 60×10⁻⁹ cm², further preferably not lower than 100×10⁻⁹ cm², and particularly preferably not lower than 200×10⁻⁹ cm². A higher GBP leads to a higher fluidity of (liquid permeability by) a liquid flowing between particles of a swollen gel, and thus is preferable.

Meanwhile, the GBP is preferably not higher than 400×10⁻⁹ cm² and more preferably not higher than 300×10⁻⁹ cm² in terms of balance with other physical properties.

### [5] Use of Water Absorbent Agent (Absorbent Body, Absorption Layer)

It is preferable that the water absorbent agent according to the present invention is mainly used for an absorbent body (absorption layer) of an absorbent article such as a disposable diaper or a sanitary napkin. It is more preferable that the water absorbent agent is used for an absorbent body (absorption layer) of an absorbent article such that the use amount of the water absorbent agent per absorbent article is large.

The aforementioned absorbent body means a product obtained by shaping the particulate water absorbent agent into a sheet form, a fibrous form, a tubular form, or another form. The particulate water absorbent agent is preferably shaped into a sheet form, to be an absorption layer. In addition to the water absorbent agent according to the present invention, an absorbent material such as pulp fibers, an adhesive, a nonwoven fabric, and other materials can also be used in combination for the shaping. In this case, the amount of the water absorbent agent in the absorbent body (absorption layer) (hereinafter, written as a "core concentration") is preferably not lower than 50% by mass, more preferably not lower than 60% by mass, further preferably not lower than 70% by mass, and particularly preferably not lower than 80% by mass, and meanwhile, the upper limit of the core concentration is preferably 100% by mass.

If the core concentration is set to fall within the aforementioned range, use of the aforementioned absorbent body (absorption layer) for an absorbent article enables, even when the water absorbent agent is made into a gel by absorbing urine, appropriate spaces to be formed among particles of the gel.

### [6] Absorbent Article

An absorbent article according to the present invention includes the aforementioned absorbent body (absorption layer) and ordinarily has a liquid-permeable front surface sheet and a liquid-impermeable back surface sheet. Examples of the absorbent article include disposable diapers, sanitary napkins, and other absorbent articles.

In the case where the absorbent article is, for example, a disposable diaper, the disposable diaper is made by interposing an absorbent body containing the water absorbent agent of the present invention between a liquid-permeable top sheet located so as to come into contact with the skin of a person when the disposable diaper is worn and a liquid-impermeable back sheet located outward when the disposable diaper is worn. The disposable diaper is further provided with a member known to a person skilled in the art, such as adhesive tape for fixing the disposable diaper after being worn.

In the absorbent article according to the present invention, when the absorbent body (absorption layer) absorbs a liquid and the water absorbent agent swells and is made into a gel, appropriate spaces are formed among particles of the gel and a pleasant aroma is emitted through the spaces. Thus, an absorption article comfortable to a wearer and his/her care giver can be provided.

The water absorbent agent according to the present invention can be suitably used also for, besides the aforementioned disposable diaper and sanitary napkin, a pet urine absorbing agent, a urine gelling agent for portable toilets, or another absorbent article.

### EXAMPLES

Hereinafter, the present invention will be more specifically described by means of examples and comparative examples. Electrical devices used for measuring various physical properties of the examples and the comparative examples, and water absorbent agents, use power supplies of 200 V or 100 V/60 Hz unless otherwise specified. Various physical properties of the water absorbent agents were measured under a condition of room temperature (20°C to 25°C) and a relative humidity of 50±5%RH unless otherwise specified. For convenience, the term "liters" is sometimes written as "l" or "L", and the term "% by mass" is sometimes written as "wt%".

### [Physical Properties of Water Absorbent Agents]

Hereinafter, methods for measuring the various physical properties of water absorbent agents according to the present invention will be described. If the measurement target is an object other than a water absorbent agent, the measurement method applies while the "water absorbent agent" is replaced with the object to be measured. For example, if the measurement target is a "pre-surface-crosslinking water absorbent resin", the measurement method applies while the "water absorbent agent" in the measurement method is replaced with the "pre-surface-crosslinking water absorbent resin".

### (a) Absorption Capacity without Pressure (CRC)

The CRC of each water absorbent agent was measured according to WSP241.3 (10) of the EDANA method.

### (b) Absorption Capacity under Pressure (AAP)

The AAP of each water absorbent agent was measured according to WSP242.3 (10) of the EDANA method.

### (c) Gel Bed Permeability (GBP)

The gel bed permeability (GBP) by a 0.9%-by-mass aqueous solution of sodium chloride under a pressure of 2.1 kPa (0.3 psi) was measured according to a GBP test method disclosed in International Publication No. 2005/016393.

### [Production Example 1] Production of Crosslinking Agent

200 g (2.2 moles) of glycerin and 0.3 g of boron trifluoride ether complex as a catalyst were put into a separable flask having a capacity of 1000 mL and were stirred while being heated. Then, 442 g (4.8 moles) of epichlorohydrin was dropped to the mixture, and the contents of the flask were stirred. Further, 69 g (0.8 moles) of a 50% aqueous solution of dimethylamine was added, and the mixture was stirred. Then, 62 g of 48.5% liquid caustic soda was dropped, and the mixture was continuously aged for 12 hours. The obtained reaction product was dissolved in methanol, and then the solution was filtered. 168 g of 48.5% liquid caustic soda was added to the filtrate, and the mixture was stirred and filtered. After methanol in the filtrate was distilled, distilled water was added so that the condensed residue was dissolved therein. 20 g of 98% sulfuric acid was added, and the mixture was stirred for 12 hours.

Consequently, a crosslinking agent represented by general formula (1) was obtained. In general formula (1) , "A"s each represent a glycerin residue, "B"s each represent a substituent group represented by general formula (2) or general formula (3), "R¹"s each represent a methyl group, "R²"s each represent a hydrogen atom or a methyl group, "X" is a counterion of a quaternary ammonium group and represents a chloride ion, a sulfate ion, or a hydroxide ion, "m"s and "n"s are each 0 or 1, "m+n" is 1, and "l" is 1 to 4.

### [Production Example 2]

5.2 g of polyethylene glycol diacrylate (the average addition mole number of ethylene oxide: 9) was dissolved in 5500 g of a sodium acrylate aqueous solution (monomer concentration: 38% by mass) that had a neutralization ratio of 75 mol% and that was obtained by mixing acrylic acid, a sodium acrylate aqueous solution, and deionized water. Consequently, a reaction solution was obtained. Subsequently, the above reaction solution was supplied to a reactor formed by attaching a lid to a 10-L-capacity jacket-equipped double-arm kneader that was made of stainless steel and that had two sigma blades. The system was subjected to substitution with nitrogen gas while the reaction solution was kept at 30°C, so that dissolved oxygen in the reaction solution was removed. Then, while the reaction solution was being stirred, 28.3 g of a 10%-by-mass aqueous solution of sodium persulfate and 1.5 g of a 1%-by-mass aqueous solution of L-ascorbic acid were added. Consequently, polymerization was started 1 minute later. A polymerization peak temperature of 86°C was obtained 17 minutes after the start of the polymerization, and a hydrogel-form polymer was taken out 40 minutes after the start of the polymerization. The obtained hydrogel-form polymer had been fragmented into particles of 1 to 4 mm. The fragmented hydrogel-form polymer was spread on a wire mesh having 50 meshes (mesh opening size: 300 pm) and was subjected to hot air drying at 160°C for 60 minutes. Subsequently, the dried substance was ground by using a roll mill. Furthermore, the ground substance was classified with a wire mesh having a mesh opening size of 850 µm and was dispensed. Consequently, a pre-surface-crosslinking water absorbent resin (a) in an amorphous ground form was obtained.

### [Example 1]

2.86 parts by mass of a surface crosslinking agent aqueous solution formed from 0.06 parts by mass of an aqueous solution (solids content: 44 wt%) containing the crosslinking agent (A) obtained in production example 1, 0.3 parts by mass of ethylene carbonate, 0.5 parts by mass of propylene glycol (referred to also as 1,2-propanediol), and 2 parts by mass of water, was sprayed to and mixed with 100 parts by mass of the pre-surface-crosslinking water absorbent resin (a) obtained in production example 2. By using a paddle type mixing heat treatment machine, the above mixture was subjected to heat treatment at a powder temperature of 195°C for 45 minutes while gas in an upper space of the paddle type mixing heat treatment machine was being substituted with outside air. Consequently, a post-surface-crosslinking water absorbent resin (1) was obtained. Then, the post-surface-crosslinking water absorbent resin (1) was subjected to sizing by using a JIS standard sieve having a mesh opening size of 850 µm, whereby a water absorbent agent (1) was obtained. The absorption capacity without pressure, the absorption capacity under a pressure of 4.8 kPa, and the gel bed permeability (GBP) of the water absorbent agent (1) are indicated in Table 1.

### [Comparative Example 1]

2.8 parts by mass of a surface crosslinking agent aqueous solution formed from 0.3 parts by mass of ethylene carbonate, 0.5 parts by mass of propylene glycol, and 2 parts by mass of water, was sprayed to and mixed with 100 parts by mass of the pre-surface-crosslinking water absorbent resin (a) obtained in production example 2. By using the paddle type mixing heat treatment machine, the above mixture was subjected to heat treatment at a powder temperature of 195°C for 45 minutes while gas in the upper space of the paddle type mixing heat treatment machine was being substituted with outside air. Consequently, a post-surface-crosslinking water absorbent resin (2) was obtained. Then, the post-surface-crosslinking water absorbent resin (2) was subjected to sizing by using the JIS standard sieve having a mesh opening size of 850 µm, whereby a water absorbent agent (2) was obtained. The absorption capacity without pressure, the absorption capacity under a pressure of 4.8 kPa, and the gel bed permeability (GBP) of the water absorbent agent (2) are indicated in Table 1.

**[Table 1]**

| | Absorption capacity without pressure - CRC [g/g] | Absorption capacity under a pressure of 4.8 kPa - AAP [g/g] | Gel bed permeability - GBP [10⁻⁹ cm²] |
|---|---|---|---|
| Example 1 | 33 | 27 | 72 |
| Comparative Example 1 | 33 | 25 | 48 |

As indicated in Table 1, differences in physical properties depending on the presence/absence of the crosslinking agent (A) have been observed between the water absorbent agents having CRC adjusted to 33 g/g. The evaluation results indicate that the absorption capacity under pressure (AAP) and the gel bed permeability (GBP) were improved by using the crosslinking agent (A).

### [Production Example 3]

A monomer aqueous solution was formed from 300 parts by weight of acrylic acid, 105 parts by weight of a 48%-by-weight aqueous solution of sodium hydroxide, 0.570 parts by weight of polyethylene glycol diacrylate (average n number: 9), 15.9 parts by weight of a 0.1%-by-weight aqueous solution of trisodium diethylenetriamine pentaacetate, and 322 parts by weight of deionized water. Next, the above monomer aqueous solution having a temperature adjusted to 38°C was continuously supplied by using a metering pump, and then 109 parts by weight of a 48%-by-weight aqueous solution of sodium hydroxide was further continuously subjected to line mixing. At this time, the temperature of the monomer aqueous solution had risen to 80°C owing to the heat of neutralization. Furthermore, 11.3 parts by weight of a 4%-by-weight aqueous solution of sodium persulfate was continuously subjected to line mixing, and then the mixture was continuously supplied to a continuous polymerization machine having a flat polymerization belt provided with weirs at both edges, such that the thickness of the mixture was 10 mm. Then, polymerization (polymerization time: 3 minutes) was continuously performed, whereby a belt-shaped hydrogel was obtained. The obtained belt-shaped hydrogel was successively cut, at equal intervals, in a width direction with respect to the advancement direction of the polymerization belt such that a cut length was 300 mm, whereby a hydrogel was obtained. The obtained hydrogel was supplied to a screw extruder and subjected to gel grinding. Next, the above particulate hydrogel was sprinkled (the temperature of the particulate hydrogel was 80°C at this time) on a ventilation plate within 1 minute after the end of the gel grinding and dried at 185°C for 30 minutes, whereby a dried polymer was obtained. The average speed of hot air was 1.0 [m/s] in a direction perpendicular to the advancement direction of a ventilation belt. The speed of hot air was measured by using a constant-temperature thermal anemometer ANEMOMASTER 6162 manufactured by KANOMAX JAPAN INC. Subsequently, the total amount of the dried polymer obtained in the above drying step was supplied to a three-stage roll mill and ground (in the grinding step). Then, the dried polymer having been ground was further classified with JIS standard sieves having mesh opening sizes of 710 µm and 175 µm, whereby a water absorbent resin powder (b) as a water absorbent resin (solids content: 95% by mass) was obtained. The CRC of the water absorbent resin powder (b) was 50.6 [g/g].

### [Example 2]

2.55 parts by mass of a surface crosslinking agent aqueous solution formed from 0.05 parts by mass of an aqueous solution (solids content: 44 wt%) containing the crosslinking agent (A) obtained in production example 1, 0.2 parts by mass of 1,4-butanediol, 0.3 parts by mass of propylene glycol, and 2 parts by mass of water, was sprayed to and mixed with 100 parts by mass of the pre-surface-crosslinking water absorbent resin (b) obtained in production example 3. By using a paddle type mixing heat treatment machine, the above mixture was subjected to heat treatment at a powder temperature of 195°C for 37 minutes while gas in an upper space of the paddle type mixing heat treatment machine was being substituted with outside air. Consequently, a post-surface-crosslinking water absorbent resin (3) was obtained. Then, the post-surface-crosslinking water absorbent resin (3) was subjected to sizing by using a JIS standard sieve having a mesh opening size of 850 µm, whereby a water absorbent agent (3) was obtained. The absorption capacity without pressure, and the absorption capacity under a pressure of 4.8 kPa of the water absorbent agent (3) are indicated in Table 2.

### [Comparative Example 2]

2.5 parts by mass of a surface crosslinking agent aqueous solution formed from 0.2 parts by mass of 1,4-butanediol, 0.3 parts by mass of propylene glycol, and 2 parts by mass of water, was sprayed to and mixed with 100 parts by mass of the pre-surface-crosslinking water absorbent resin (b) obtained in production example 3. By using the paddle type mixing heat treatment machine, the above mixture was subjected to heat treatment at a powder temperature of 195°C for 40 minutes while gas in the upper space of the paddle type mixing heat treatment machine was being substituted with outside air. Consequently, a post-surface-crosslinking water absorbent resin (4) was obtained. Then, the post-surface-crosslinking water absorbent resin (4) was subjected to sizing by using the JIS standard sieve having a mesh opening size of 850 µm, whereby a water absorbent agent (4) was obtained. The absorption capacity without pressure and the absorption capacity under a pressure of 4.8 kPa are indicated in Table 2.

**[Table 2]**

| | Absorption capacity without pressure - CRC [g/g] | Absorption capacity under a pressure of 4.8 kPa - AAP [g/g] | Gel bed permeability - GBP [10⁻⁹ cm²] |
|---|---|---|---|
| Example 2 | 38 | 25 | - |
| Comparative Example 2 | 38 | 22 | - |

As indicated in Table 2, differences in physical properties depending on the presence/absence of the crosslinking agent (A) have been observed between the water absorbent agents having CRC adjusted to 38 g/g. The evaluation results indicate that the absorption capacity under pressure (AAP) and the gel bed permeability (GBP) were improved by using the crosslinking agent (A).

### [Production Example 4]

A monomer aqueous solution was formed from 300 parts by weight of acrylic acid, 122 parts by weight of a 48%-by-weight aqueous solution of sodium hydroxide, 0.288 parts by weight of polyethylene glycol diacrylate (average n number: 9), 18.2 parts by weight of a 0.1%-by-weight aqueous solution of trisodium diethylenetriamine pentaacetate, and 288 parts by weight of deionized water. Next, the above monomer aqueous solution having a temperature adjusted to 38°C was continuously supplied by using a metering pump, and then 128 parts by weight of a 48%-by-weight aqueous solution of sodium hydroxide was further continuously subjected to line mixing. At this time, the temperature of the monomer aqueous solution had risen to 80°C owing to the heat of neutralization. Furthermore, 14.6 parts by weight of a 4%-by-weight aqueous solution of sodium persulfate was continuously subjected to line mixing, and then the mixture was continuously supplied to a continuous polymerization machine having a flat polymerization belt provided with weirs at both edges, such that the thickness of the mixture was 10 mm. Then, polymerization (polymerization time: 3 minutes) was continuously performed, whereby a belt-shaped hydrogel was obtained. The obtained belt-shaped hydrogel was successively cut, at equal intervals, in a width direction with respect to the advancement direction of the polymerization belt such that a cut length was 300 mm, whereby a hydrogel was obtained. The obtained hydrogel was supplied to a screw extruder and subjected to gel grinding. Next, the above particulate hydrogel was sprinkled (the temperature of the particulate hydrogel was 80°C at this time) on a ventilation plate within 1 minute after the end of the gel grinding and dried at 185°C for 30 minutes, whereby a dried polymer was obtained. The average speed of hot air was 1.0 [m/s] in a direction perpendicular to the advancement direction of a ventilation belt. The speed of hot air was measured by using a constant-temperature thermal anemometer ANEMOMASTER 6162 manufactured by KANOMAX JAPAN INC. Subsequently, the total amount of the dried polymer obtained in the above drying step was supplied to a three-stage roll mill and ground (in the grinding step). Then, the dried polymer having been ground was further classified with JIS standard sieves having mesh opening sizes of 710 µm and 175 µm, whereby a water absorbent resin powder (c) as a water absorbent resin (solids content: 95% by mass) was obtained. The CRC of the water absorbent resin powder (c) was 54.1 [g/g].

### [Example 3]

2.65 parts by mass of a surface crosslinking agent aqueous solution formed from 0.05 parts by mass of an aqueous solution (solids content: 44 wt%) containing the crosslinking agent (A) obtained in production example 1, 0.2 parts by mass of ethylene glycol, 0.4 parts by mass of propylene glycol, and 2 parts by mass of water, was sprayed to and mixed with 100 parts by mass of the pre-surface-crosslinking water absorbent resin (c) obtained in production example 4. By using a paddle type mixing heat treatment machine, the above mixture was subjected to heat treatment at a powder temperature of 195°C for 33 minutes while gas in an upper space of the paddle type mixing heat treatment machine was being substituted with outside air. Consequently, a post-surface-crosslinking water absorbent resin (5) was obtained. Then, the post-surface-crosslinking water absorbent resin (5) was subjected to sizing by using a JIS standard sieve having a mesh opening size of 850 µm, whereby a water absorbent agent (5) was obtained. The absorption capacity without pressure, and the absorption capacity under a pressure of 4.8 kPa of the water absorbent agent (5) are indicated in Table 3.

### [Comparative Example 3]

2.6 parts by mass of a surface crosslinking agent aqueous solution formed from 0.2 parts by mass of ethylene glycol, 0.4 parts by mass of propylene glycol, and 2 parts by mass of water, was sprayed to and mixed with 100 parts by mass of the pre-surface-crosslinking water absorbent resin (c) obtained in production example 4. By using the paddle type mixing heat treatment machine, the above mixture was subjected to heat treatment at a powder temperature of 195°C for 37 minutes while gas in the upper space of the paddle type mixing heat treatment machine was being substituted with outside air. Consequently, a post-surface-crosslinking water absorbent resin (6) was obtained. Then, the post-surface-crosslinking water absorbent resin (6) was subjected to sizing by using the JIS standard sieve having a mesh opening size of 850 µm, whereby a water absorbent agent (6) was obtained. The absorption capacity without pressure and the absorption capacity under a pressure of 4.8 kPa are indicated in Table 3.

**[Table 3]**

| | Absorption capacity without pressure - CRC [g/g] | Absorption capacity under a pressure of 4.8 kPa - AAP [g/g] | Gel bed permeability - GBP [10⁻⁹ cm²] |
|---|---|---|---|
| Example 3 | 40 | 20 | - |
| Comparative Example 3 | 40 | 15 | - |

As indicated in Table 3, differences in physical properties depending on the presence/absence of the crosslinking agent (A) have been observed between the water absorbent agents having CRC adjusted to 40 g/g. The evaluation results indicate that the absorption capacity under pressure (AAP) and the gel bed permeability (GBP) were improved by using the crosslinking agent (A).

### [Example 4]

2.65 parts by mass of a surface crosslinking agent aqueous solution formed from 0.05 parts by mass of an aqueous solution (solids content: 44 wt%) containing the crosslinking agent (A) obtained in production example 1, 0.2 parts by mass of 1,3-propanediol, 0.4 parts by mass of propylene glycol, and 2 parts by mass of water, was sprayed to and mixed with 100 parts by mass of the pre-surface-crosslinking water absorbent resin (c) obtained in production example 4. By using a paddle type mixing heat treatment machine, the above mixture was subjected to heat treatment at a powder temperature of 195°C for 31 minutes while gas in an upper space of the paddle type mixing heat treatment machine was being substituted with outside air. Consequently, a post-surface-crosslinking water absorbent resin (7) was obtained. Then, the post-surface-crosslinking water absorbent resin (7) was subjected to sizing by using a JIS standard sieve having a mesh opening size of 850 µm, whereby a water absorbent agent (7) was obtained. The absorption capacity without pressure, and the absorption capacity under a pressure of 4.8 kPa of the water absorbent agent (7) are indicated in Table 4.

### [Comparative Example 4]

2.6 parts by mass of a surface crosslinking agent aqueous solution formed from 0.2 parts by mass of 1,3-propanediol, 0.4 parts by mass of propylene glycol, and 2 parts by mass of water, was sprayed to and mixed with 100 parts by mass of the pre-surface-crosslinking water absorbent resin (c) obtained in production example 4. By using the paddle type mixing heat treatment machine, the above mixture was subjected to heat treatment at a powder temperature of 195°C for 35 minutes while gas in the upper space of the paddle type mixing heat treatment machine was being substituted with outside air. Consequently, a post-surface-crosslinking water absorbent resin (8) was obtained. Then, the post-surface-crosslinking water absorbent resin (8) was subjected to sizing by using the JIS standard sieve having a mesh opening size of 850 µm, whereby a water absorbent agent (8) was obtained. The absorption capacity without pressure and the absorption capacity under a pressure of 4.8 kPa are indicated in Table 4.

**[Table 4]**

| | Absorption capacity without pressure - CRC [g/g] | Absorption capacity under a pressure of 4.8 kPa - AAP [g/g] | Gel bed permeability - GBP [10⁻⁹ cm²] |
|---|---|---|---|
| Example 4 | 41 | 18 | - |
| Comparative Example 4 | 41 | 13 | - |

As indicated in Table 4, differences in physical properties depending on the presence/absence of the crosslinking agent (A) have been observed between the water absorbent agents having CRC adjusted to 41 g/g. The evaluation results indicate that the absorption capacity under pressure (AAP) and the gel bed permeability (GBP) were improved by using the crosslinking agent (A).

As indicated by the evaluation results in Tables 1 to 4, even though there were differences in physical property (CRC) among the water absorbent agents, use of the crosslinking agent (A) resulted in improvement of the absorption capacity under pressure (AAP), the gel bed permeability (GBP), and the other physical property.

### [Physical Properties of Water Absorbent Agents Having CRC Lower Than 35 g/g]

Table 5 indicates evaluation results of the absorption capacity under pressure (AAP) and the gel bed permeability (GBP) of the water absorbent agents having CRC lower than 35 g/g.

**[Table 5]**

| | Absorption capacity without pressure - CRC [g/g] | Absorption capacity under a pressure of 4.8 kPa - AAP [g/g] | Gel bed permeability - GBP [10⁻⁹ cm²] |
|---|---|---|---|
| Example 1 | 33 | 27 | 72 |
| Comparative Example 1 | 33 | 25 | 48 |

As indicated in Table 5, the water absorbent agent in which the crosslinking agent (A) was used, resulted in having an excellent absorption capacity under pressure (AAP) and an excellent gel bed permeability (GBP).

### [Physical Properties of Water Absorbent Agents Having CRC Not Lower Than 35 g/g and Not Higher Than 45 g/g]

FIG. 1 shows the relationship between the absorption capacity without pressure (CRC) and the absorption capacity under pressure (AAP) in Examples 2 to 4 and Comparative Examples 2 to 4.

As shown in FIG. 1, the relationship is such that a higher absorption capacity without pressure (CRC) leads to a lower absorption capacity under pressure (AAP). In each of the examples in which the crosslinking agent (A) was used, the relationship between the absorption capacity without pressure (CRC) and the absorption capacity under pressure (AAP) was at a more excellent level than in the corresponding comparative example in which the crosslinking agent (A) was not used. That is, in the example, even with a high absorption capacity without pressure (CRC), a relatively higher absorption capacity under pressure (AAP) was achieved than in the comparative example.

## Claims

1. A production method for water absorbent agent comprising:
a polyacrylic acid (salt)-based water absorbent resin is surface-crosslinked with a surface-crosslinking agent containing a compound represented by the following general formula (1): 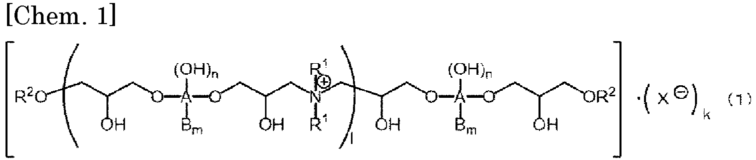
wherein "A"s each represent an (m+n+2)-valent C1-C6 polyhydric alcohol residue, "B"s each represent a substituent group represented by the following general formula (2); 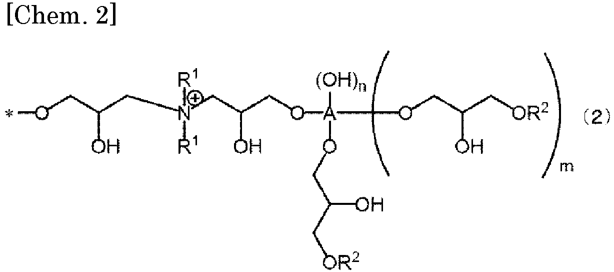
or by the following general formula (3); 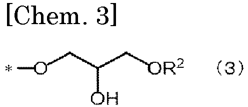
wherein,
"R¹"s each represent a C1-C6 hydrocarbon group,
"R²"s each represent a hydrogen atom or a C1-C4 hydrocarbon group,
"X" is a counterion of a quaternary ammonium group and represents a chloride ion, a bromide ion, a sulfate ion, a nitrate ion, a phosphate ion, or a hydroxide ion, "m", and "n" each independently represent an integer from 0 to 4, and "m" and "n" bound to the same substituent group A satisfy 0≤m+n≤4,
"l" is 1 to 6, and
"k" is an integer 1 or more.

2. The production method for water absorbent agent according to claim 1, wherein "R¹"s are a methyl group.

3. The production method for water absorbent agent according to claim 1 or 2, wherein "m+n" satisfies 0≤m+n≤1.

4. The production method for water absorbent agent according to any one of claims 1 to 3, wherein the surface-crosslinking agent further includes a polyhydric alcohol compound and an alkylene carbonate in addition to the compound represented by the general formula (1).

5. The production method for water absorbent agent according to any one of claims 1 to 4, wherein an amount of the surface-crosslinking agent is 0.01 to 10 parts by mass with respect to 100 parts by mass of a pre-surface-crosslinking water absorbent resin.

6. The production method for water absorbent agent according to any one of claims 1 to 5, wherein the surface-crosslinking agent in a form of water solution is sprayed or dropped to the pre-surface-crosslinking water absorbent resin.

7. The production method for water absorbent agent according to any one of claims 1 to 6, wherein the water absorbent agent satisfies at least one of the followings: an absorption capacity without pressure (CRC) of the water absorbent agent is 25 g/g or more and 40 g/g or less,
an excellent absorption capacity under pressure (AAP) of the water absorbent agent is 20 g/g or more,
A gel bed permeability (GBP) under a pressure of 2.1 kPa (0.3 psi) of the water absorbent agent is 50×10⁻⁹ cm² or more;
wherein the measurement methods for absorption capacity without pressure (CRC), absorption capacity under pressure (AAP), and gel bed permeability (GBP) are defined in the description.

8. A water absorbent resin composition comprising:
the composition includes
a polyacrylic acid (salt)-based water absorbent resin and surface crosslinking agent containing a compound represented by the following general formula (1): 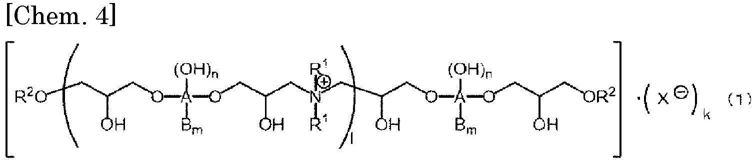
wherein "A"s each represent an (m+n+2)-valent C1-C6 polyhydric alcohol residue, "B"s each represent a substituent group represented by the following general formula (2); 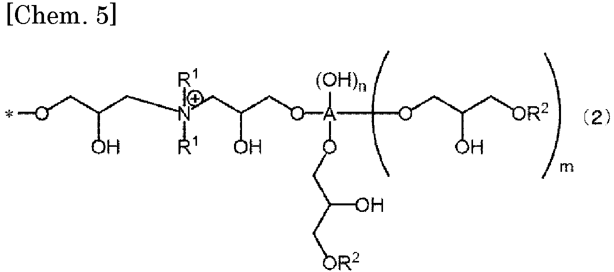
or by the following general formula (3); 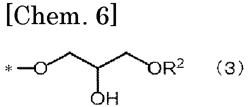
wherein,
"R¹"s each represent a C1-C6 hydrocarbon group,
"R²"s each represent a hydrogen atom or a C1-C4 hydrocarbon group,
"X" is a counterion of a quaternary ammonium group and represents a chloride ion, a bromide ion, a sulfate ion, a nitrate ion, a phosphate ion, or a hydroxide ion,
"m", and "n" each independently represent an integer from 0 to 4, and "m" and "n" bound to the same substituent group A satisfy 0≤m+n≤4,
"l" is 1 to 6, and
"k" is an integer 1 or more.

9. A post-surface-crosslinking polyacrylic acid (salt)-based water absorbent resin having a structure represented by the following general formula (11): 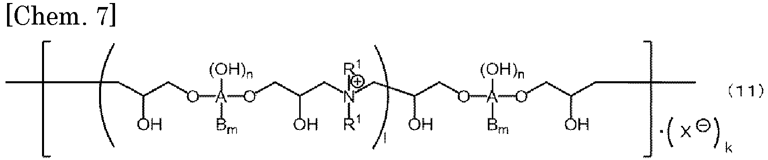
wherein "A"s each represent an (m+n+2)-valent C1-C6 polyhydric alcohol residue, "B"s each represent a substituent group represented by the following general formula (12); 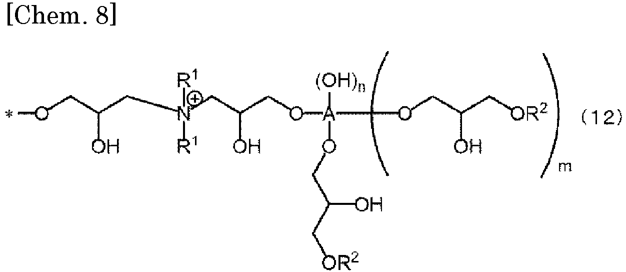
or by the following general formula (13), 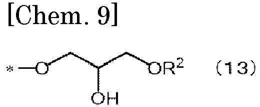
wherein,
"R¹"s each represent a C1-C6 hydrocarbon group,
"R²"s each represent a hydrogen atom or a C1-C4 hydrocarbon group,
"X" is a counterion of a quaternary ammonium group and represents a chloride ion, a bromide ion, a sulfate ion, a nitrate ion, a phosphate ion, or a hydroxide ion, "m", and "n" each independently represent an integer from 0 to 4, and "m" and "n" bound to the same substituent group A satisfy 0≤m+n≤4,
"l" is 1 to 6, and
"k" is an integer 1 or more.

## Patentansprüche

1. Herstellungsverfahren für ein wasserabsorbierendes Mittel, umfassend:
ein wasserabsorbierendes Harz auf Basis von Polyacrylsäure(salz), welches mit einem Oberflächenvernetzungsmittel oberflächenvernetzt ist, das eine Verbindung der folgenden allgemeinen Formel (1) enthält: 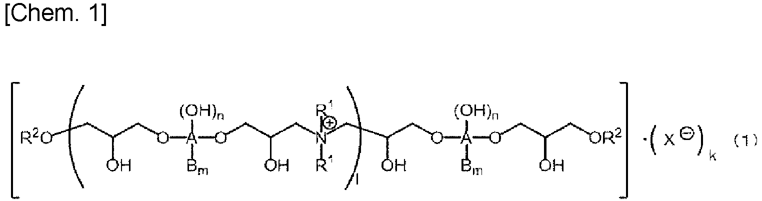
wobei "A" jeweils einen (m+n+2)-wertigen mehrwertigen C1-C6- Alkoholrest darstellt, "B" jeweils eine Substituentengruppe darstellt, die durch die folgende allgemeine Formel (2) dargestellt wird; 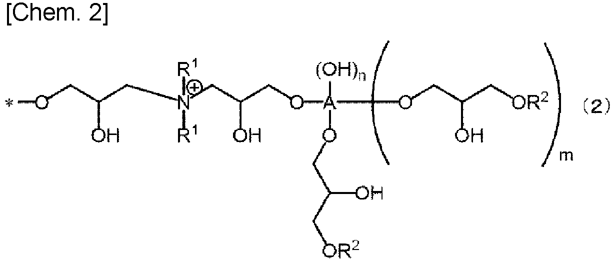
oder durch die folgende allgemeine Formel (3); 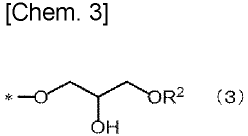
wobei,
"R¹" jeweils eine C1-C6-Kohlenwasserstoffgruppe darstellt,
"R²" jeweils ein Wasserstoffatom oder eine C1-C4-Kohlenwasserstoffgruppe darstellt, "X" ein Gegenion einer quartären Ammoniumgruppe ist und ein Chloridion, ein Bromidion, ein Sulfation, ein Nitration, ein Phosphation oder ein Hydroxidion darstellt, "m" und "n" jeweils unabhängig voneinander eine ganze Zahl von 0 bis 4 darstellen, und "m" und "n", die an dieselbe Substituentengruppe A gebunden sind, 0≤m+n≤4 erfüllen,
"l" für 1 bis 6 steht, und
"k" eine ganze Zahl von 1 oder mehr ist.

2. Herstellungsverfahren für ein wasserabsorbierendes Mittel gemäß Anspruch 1, wobei "R¹" eine Methylgruppe ist.

3. Herstellungsverfahren für ein wasserabsorbierendes Mittel gemäß Anspruch 1 oder 2, wobei "m+n" 0≤m+n≤1 erfüllt.

4. Herstellungsverfahren für ein wasserabsorbierendes Mittel gemäß einem der Ansprüche 1 bis 3, wobei das Oberflächenvernetzungsmittel zusätzlich zu der durch die allgemeine Formel (1) dargestellten Verbindung eine mehrwertige Alkoholverbindung und ein Alkylencarbonat enthält.

5. Herstellungsverfahren für ein wasserabsorbierendes Mittel gemäß einem der Ansprüche 1 bis 4, wobei eine Menge des Oberflächenvernetzungsmittels 0,01 bis 10 Massenteile bezogen auf 100 Massenteile eines vor der Oberflächenvernetzung hergestellten wasserabsorbierenden Harzes beträgt.

6. Herstellungsverfahren für ein wasserabsorbierendes Mittel nach einem der Ansprüche 1 bis 5, wobei das oberflächenvernetzende Mittel in Form einer Wasserlösung auf das vor der Oberflächenvernetzung hergestellten wasserabsorbierenden Harzes gesprüht oder getropft wird.

7. Herstellungsverfahren für ein wasserabsorbierendes Mittel nach einem der Ansprüche 1 bis 6, wobei das wasserabsorbierende Mittel mindestens eine der folgenden Bedingungen erfüllt:
eine Absorptionskapazität ohne Druck (CRC) des wasserabsorbierenden Mittels beträgt 25 g/g oder mehr und 40 g/g oder weniger,
eine ausgezeichnete Absorptionskapazität unter Druck (AAP) des wasserabsorbierenden Mittels beträgt 20 g/g oder mehr,
eine Gelbettdurchlässigkeit (GBP) unter einem Druck von 2,1 kPa (0,3 psi) des wasserabsorbierenden Mittels beträgt 50×10⁻¹⁹ cm² oder mehr;
wobei die Messmethoden für die Absorptionskapazität ohne Druck (CRC), die Absorptionskapazität unter Druck (AAP) und die Gelbettdurchlässigkeit (GBP) in der Beschreibung definiert sind.

8. Wasserabsorbierende Harzzusammensetzung, umfassend:
ein wasserabsorbierendes Harz auf Basis von Polyacrylsäure(salz) und ein Oberflächenvernetzungsmittel, das eine Verbindung enthält, die durch die folgende allgemeine Formel (1) dargestellt wird: 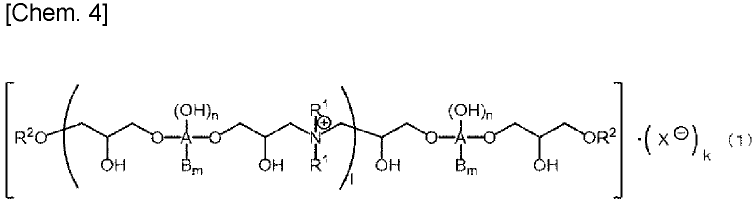
wobei "A" jeweils einen (m+n+2)-wertigen C1-C6-mehrwertigen Alkoholrest darstellt, "B" jeweils eine Substituentengruppe darstellt, die durch die folgende allgemeine Formel (2) dargestellt wird; 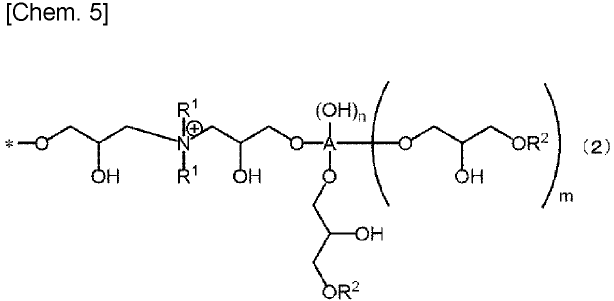
oder durch die folgende allgemeine Formel (3); 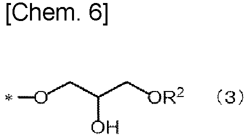
wobei "R¹" jeweils eine C1-C6-Kohlenwasserstoffgruppe darstellt,
"R²" jeweils ein Wasserstoffatom oder eine C1-C4-Kohlenwasserstoffgruppe darstellt,
"X" ein Gegenion einer quaternären Ammoniumgruppe ist und ein Chloridion, ein Bromidion, ein Sulfation, ein Nitration, ein Phosphation oder ein Hydroxidion darstellt, "m" und "n" jeweils unabhängig voneinander eine ganze Zahl von 0 bis 4 darstellen, und "m" und "n", die an dieselbe Substituentengruppe A gebunden sind, 0≤m+n≤4 erfüllen,
"l" für 1 bis 6 steht, und
"k" eine ganze Zahl von 1 oder mehr ist.

9. Oberflächenvernetztes wasserabsorbierendes Harz auf Basis von Polyacrylsäure(salz) mit einer Struktur, die durch die folgende allgemeine Formel (11) dargestellt wird: 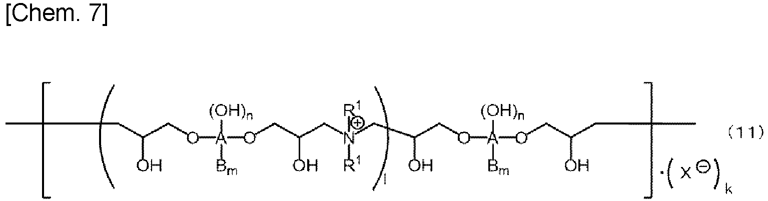
wobei "A" jeweils einen (m+n+2)-wertigen C1-C6-mehrwertigen Alkoholrest darstellt, "B" jeweils eine Substituentengruppe darstellt, die durch die folgende allgemeine Formel (12) dargestellt wird; 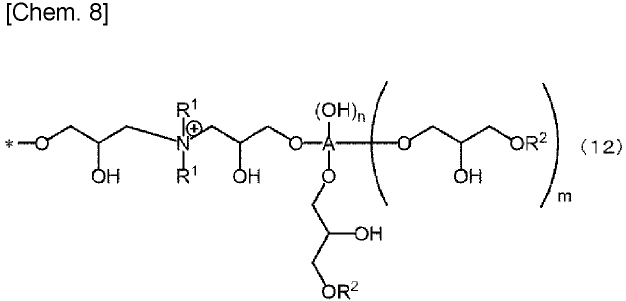
oder durch die folgende allgemeine Formel (13), 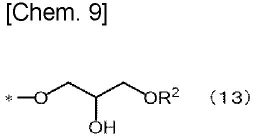
wobei "R¹" jeweils eine C1-C6-Kohlenwasserstoffgruppe darstellt,
"R²" jeweils ein Wasserstoffatom oder eine C1-C4-Kohlenwasserstoffgruppe darstellt,
"X" ein Gegenion einer quaternären Ammoniumgruppe ist und ein Chloridion, ein Bromidion, ein Sulfation, ein Nitration, ein Phosphation oder ein Hydroxidion darstellt, "m" und "n" jeweils unabhängig voneinander eine ganze Zahl von 0 bis 4 darstellen, und "m" und "n", die an dieselbe Substituentengruppe A gebunden sind, 0≤m+n≤4 erfüllen,
"l" für 1 bis 6 steht, und
"k" eine ganze Zahl von 1 oder mehr ist.

## Revendications

1. Procédé de production d'un agent à capacité d'absorption d'eau comprenant :
une résine à capacité d'absorption d'eau à base d'acide polyacrylique ou d'un sel de celui-ci qui est réticulée en surface avec un agent de réticulation de surface comprenant un composé représenté par la formule générale suivante (1) : 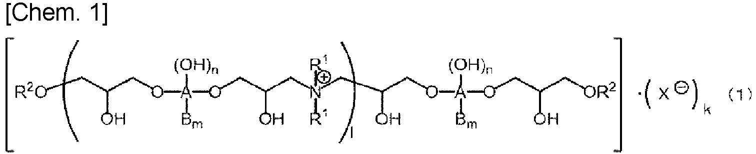
dans lequel les « A » représentent chacun un résidu d'alcool polyhydrique en C₁ à C₆ de valence (m+n+2),
les « B » représentent chacun un groupe substituant représenté par la formule générale suivante (2) ; 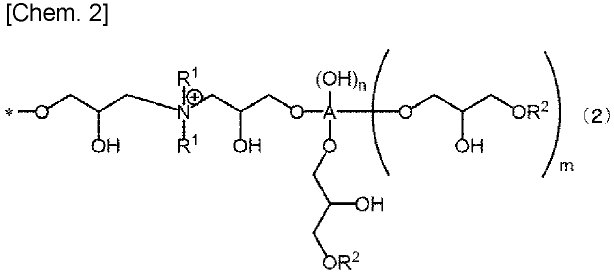
ou par la formule générale suivante (3) ; 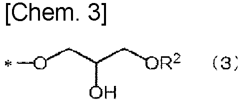
dans lequel,
les « R¹ » représentent chacun un groupe hydrocarboné en C₁ à C₆,
les « R² » représentent chacun un atome d'hydrogène ou un groupe hydrocarboné en C₁ à C₄,
« X » est un contre-ion d'un groupe d'ammonium quaternaire et représente un ion chlorure, un ion bromure, un ion sulfate, un ion nitrate, un ion phosphate ou un ion hydroxyde,
« m » et « n » représentent chacun indépendamment un nombre entier compris entre 0 et 4, et « m » et « n » liés au même groupe substituant A satisfont à l'équation 0 ≤ m+n ≤ 4,
« l » est compris entre 1 et 6, et
« k » est un nombre entier égal ou supérieur à 1.

2. Procédé de production d'un agent à capacité d'absorption d'eau selon la revendication 1, dans lequel les « R¹ » sont un groupe méthyle.

3. Procédé de production d'un agent à capacité d'absorption d'eau selon la revendication 1 ou 2, dans lequel « m+n » satisfait à l'équation 0 ≤ m+n ≤ 1.

4. Procédé de production d'un agent à capacité d'absorption d'eau selon l'une quelconque des revendications 1 à 3, dans lequel l'agent de réticulation de surface comprend en outre un composé d'alcool polyhydrique et un carbonate d'alkylène en plus du composé représenté par la formule générale (1).

5. Procédé de production d'un agent à capacité d'absorption d'eau selon l'une quelconque des revendications 1 à 4, dans lequel une quantité de l'agent de réticulation de surface est comprise entre 0,01 et 10 parties en masse par rapport à 100 parties en masse d'une résine à capacité d'absorption d'eau à pré-réticulation de surface.

6. Procédé de production d'un agent à capacité d'absorption d'eau selon l'une quelconque des revendications 1 à 5, dans lequel l'agent de réticulation de surface sous forme de solution aqueuse est pulvérisé ou déposé sur la résine à capacité d'absorption d'eau à pré-réticulation de surface.

7. Procédé de production d'un agent à capacité d'absorption d'eau selon l'une quelconque des revendications 1 à 6, dans lequel l'agent à capacité d'absorption d'eau satisfait à au moins l'une des conditions suivantes : une capacité d'absorption sans pression (CRC) de l'agent à capacité d'absorption d'eau est supérieure ou égale à 25 g/g et inférieure ou égale à 40 g/g,
une excellente capacité d'absorption sous pression (AAP) de l'agent à capacité d'absorption d'eau est supérieure ou égale à 20 g/g,
une perméabilité de lit de gel (GBP) sous une pression de 2,1 kPa (0,3 psi) de l'agent à capacité d'absorption d'eau est supérieure ou égale à
50×10⁻⁹ cm² ;
dans lequel les méthodes de mesure de la capacité d'absorption sans pression (CRC), de la capacité d'absorption sous pression (AAP) et de la perméabilité de lit de gel (GBP) sont définies dans la description.

8. Composition de résine à capacité d'absorption d'eau comprenant :
la composition inclut
une résine à capacité d'absorption d'eau à base d'acide polyacrylique ou d'un sel de celui-ci et un agent de réticulation de surface comprenant un composé représenté par la formule générale suivante (1) : 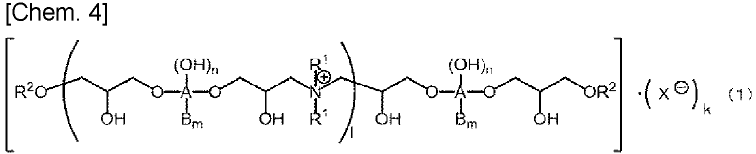
dans lequel les « A » représentent chacun un résidu d'alcool polyhydrique en C₁ à C₆ de valence (m+n+2),
les « B » représentent chacun un groupe substituant représenté par la formule générale suivante (2) ; 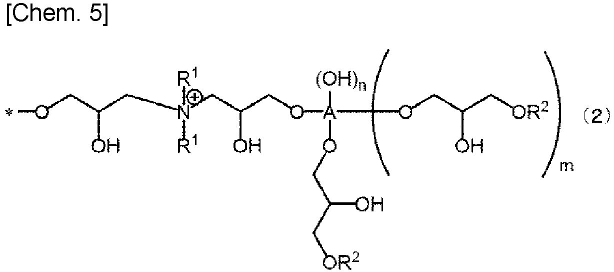
ou par la formule générale suivante (3) ; 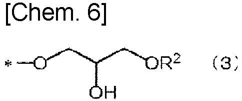
dans lequel,
les « R¹ » représentent chacun un groupe hydrocarboné en C₁ à C₆,
les « R² » représentent chacun un atome d'hydrogène ou un groupe hydrocarboné en C₁ à C₄,
« X » est un contre-ion d'un groupe d'ammonium quaternaire et représente un ion chlorure, un ion bromure, un ion sulfate, un ion nitrate, un ion phosphate ou un ion hydroxyde,
« m » et « n » représentent chacun indépendamment un nombre entier compris entre 0 et 4, et « m » et « n » liés au même groupe substituant A satisfont à l'équation 0 ≤ m+n ≤ 4,
« l » est compris entre 1 et 6, et
« k » est un nombre entier égal ou supérieur à 1.

9. Résine à capacité d'absorption d'eau à base d'acide polyacrylique ou d'un sel de celui-ci à post-réticulation de surface ayant une structure représentée par la formule générale suivante (11) : 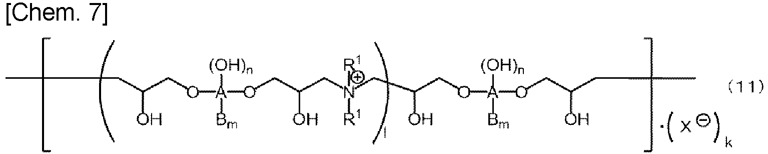
dans lequel les « A » représentent chacun un résidu d'alcool polyhydrique en C₁ à C₆ de valence (m+n+2),
les « B » représentent chacun un groupe substituant représenté par la formule générale suivante (12) ; 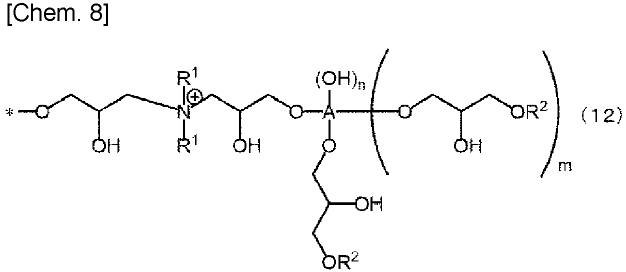
ou par la formule générale suivante (13), 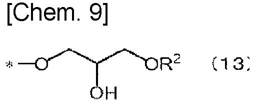
dans lequel,
les « R¹ » représentent chacun un groupe hydrocarboné en C₁ à C₆,
les « R² » représentent chacun un atome d'hydrogène ou un groupe hydrocarboné en C₁ à C₄,
« X » est un contre-ion d'un groupe d'ammonium quaternaire et représente un ion chlorure, un ion bromure, un ion sulfate, un ion nitrate, un ion phosphate ou un ion hydroxyde,
« m » et « n » représentent chacun indépendamment un nombre entier compris entre 0 et 4, et « m » et « n » liés au même groupe substituant A satisfont à l'équation 0 ≤ m+n ≤ 4,
« l » est compris entre 1 et 6, et
« k » est un nombre entier égal ou supérieur à 1.
